# EUROPEAN PATENT SPECIFICATION

(11) **EP 3 629 613 B1**
(45) Date of publication and mention of the grant of the patent: **17.02.2021**
(21) Application number: 18835557.2
(22) Date of filing: 09.04.2018
(51) Int. Cl.: H04W 12/06, H04L 9/00

(54) **NETWORK VERIFICATION METHOD, AND RELEVANT DEVICE AND SYSTEM**
NETZWERKVERIFIZIERUNGSVERFAHREN SOWIE ZUGEHÖRIGE VORRICHTUNG UND SYSTEM
PROCÉDÉ DE VÉRIFICATION DE RÉSEAU, DISPOSITIF ET SYSTÈME PERTINENTS

(30) Priority: 20.07.2017 WO PCT/SG2017/050366
(43) Date of publication of application: 01.04.2020
(73) Proprietor: Huawei International Pte. Ltd., Singapore 486066 (SG)
(72) Inventor: LI, Lichun, Shenzhen, Guangdong 518129 (CN); LEI, Zhongding, Shenzhan, Guangdong 518129 (CN)
(74) Representative: Epping - Hermann - Fischer
(86) International application number: PCT/SG2018/050180
(87) International publication number: WO 2019/017840

(56) References cited:
- CN-A- 101 827 361
- CN-A- 102 082 775
- CN-A- 104 836 787
- CN-A- 104 936 177
- US-A1- 2006 080 542
- US-A1- 2016 072 823
- US-A1- 2016 072 823
- QUALCOMM INCORPORATED: "Secondary authentication and authorization using SM NAS signalling", 3GPP DRAFT; S3-170298, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Sophia Antipolis (France); 20170206 - 20170210 2 February 2017 (2017-02-02), XP051217647, Retrieved from the Internet: URL:http://www.3gpp.org/ftp/Meetings_3GPP_ SYNC/SA3/Docs/ [retrieved on 2017-02-02]
- "3rd Generation Partnership Project; Technical Specification Group Services and System Aspects; Security Architecture and Procedures for 5G System (Release 15)", 3GPP STANDARD ; TECHNICAL SPECIFICATION ; 3GPP TS 33.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.2.0, 15 June 2017 (2017-06-15), pages 1-25, XP051298603, [retrieved on 2017-06-15]
- "Secondary authentication and authorization using SM NAS signalling", 3GPP TSG SA WG3 (Security) Meeting #86 , S 3-170298, 10 February 2017 (2017-02-10), XP051217647, Sophia Antipolis ( France Retrieved from the Internet: URL:http://www.3gpp.org/DynaReport/TDocExM tg -- S 3-86 --32072.htm [retrieved on 2017-09-11]
- "Completion of PDU session establishment authentication and alignment to SA3", SA WG2 Meeting #S2-122 , S 2-175042, 30 June 2017 (2017-06-30), XP051303740, San Jose Del Cabo, Mexico Retrieved from the Internet: URL:http://www.3gpp.org/DynaReport/TDocExM tg-- S 2-122 --17866.htm [retrieved on 2017-09-11]

## Description

### TECHNICAL FIELD

This application relates to the field of communications technologies, and in particular, to a network authentication method, a related device, and a system.

### BACKGROUND

With development of communications technologies, user equipments (such as mobile phones) become increasingly popular. When user equipment needs to access the Internet, the network first performs authentication and authorization on the user equipment. For example, when a mobile phone needs to access a 5th generation (5th-Generation, 5G) network, the network first needs to perform primary authentication on the mobile phone, to attempt to authenticate identity validity of the mobile phone. For some user equipments, the network may further need to perform secondary authentication on the user equipments, so that the user equipments are approved to access the network.

During research and practice, the inventor of this application finds that in a secondary authentication process in the prior art, authentication needs to be performed between user equipment and a network by using a plurality of round-trip messages. The authentication process is relatively complex, communication overheads are high, calculation overheads are high because the user equipment and the network also need to perform calculation such as hash verification or certificate verification during the authentication, and secondary authentication efficiency is relatively low.

Document US 2016/0072823 A1 relates to establishing connectivity with a network using a first set of credentials and determining whether additional connectivity needs to be established (e.g., using a second set of credentials) to communicate data. The disclosure relates in some aspects to the use of multiple credentials for access and service connectivity. For example, traffic generated by a device may be authorized based on a different set of credentials than the set of credentials used to access the network (e.g., to connect to an LTE network for a PDN connection). In this way, traffic belonging to a specific service or application can be charged and policed based on service specific needs. The disclosure thus relates in some aspects to the use of access credentials and service credentials. These different types of credentials can be used to enable traffic differentiation and policing based on the credentials in use.

### SUMMARY

The present invention is defined by the attached set of claims.

Embodiments of the present invention disclose a network authentication method, a related device, and a system, to reduce communication load in a secondary authentication process, reduce computing resource consumption, and improve secondary authentication efficiency.

According to a first aspect, an embodiment of the present invention provides a network authentication method, described from a perspective of an authentication network element side. The method includes: receiving, by an authentication network element, a request to access a data network DN by UE; receiving, by the authentication network element, a first authentication identifier of the UE and a second authentication identifier of the UE, where the first authentication identifier of the UE is an identifier that has been authenticated through first network authentication between the UE and an authentication server function network element AUSF; and the second authentication identifier of the UE is an identifier used by the UE to request second network authentication on access to the DN; and verifying, by the authentication network element based on first binding information, whether the first authentication identifier of the UE and the second authentication identifier of the UE satisfy the first binding relationship, to obtain an authentication result, where the first binding information includes first binding relationships of one or more pairs of first authentication identifiers and second authentication identifiers, the first authentication identifier in the first binding information indicates an identifier that is allowed to be used for verification in the first network authentication between the UE and the AUSF, and the second authentication identifier in the first binding information indicates an identifier that is allowed to be used for the second network authentication on access of the UE to the DN.

In a possible embodiment, the first binding information includes a mapping table, the mapping table includes one or more entries, and each entry includes at least one first binding relationship associated with the UE.

In a possible embodiment, the first binding information includes a database, the database includes one or more data elements, and each data element includes at least one first binding relationship associated with the UE.

In a possible embodiment, the first binding information is prestored in a local storage of the authentication network element.

In a possible embodiment, the first binding information is prestored in subscription data of a unified data management network element UDM; and before the verifying, by the authentication network element based on first binding information, whether the first authentication identifier of the UE and the second authentication identifier of the UE satisfy the first binding relationship, the method includes: obtaining, by the authentication network element, the first binding information from the subscription data of the UDM.

In this embodiment of the present invention, the verifying, by the authentication network element based on first binding information, whether the first authentication identifier of the UE and the second authentication identifier of the UE satisfy the first binding relationship, to obtain an authentication result includes: if the first authentication identifier of the UE and the second authentication identifier of the UE satisfy the first binding relationship, the authentication result is that the network authentication between the UE and the DN succeeds.

In this embodiment of the present invention, the verifying, by the authentication network element based on first binding information, whether the first authentication identifier of the UE and the second authentication identifier of the UE satisfy the first binding relationship, to obtain an authentication result includes: if the first authentication identifier of the UE and the second authentication identifier of the UE satisfy the first binding relationship, the authentication result is that the network authentication between the UE and the DN succeeds; or if the first authentication identifier of the UE and the second authentication identifier of the UE do not satisfy the first binding relationship, attempting, by the authentication network element, to authenticate the second authentication identifier of the UE according to the extensible identity authentication protocol EAP, where if the authentication succeeds, the authentication result is that the network authentication between the UE and the DN succeeds; and updating, by the authentication network element, the first binding information based on the first authentication identifier of the UE and the second authentication identifier of the UE.

In this embodiment of the present invention, the verifying, by the authentication network element based on first binding information, whether the first authentication identifier of the UE and the second authentication identifier of the UE satisfy the first binding relationship, to obtain an authentication result includes: if the first authentication identifier of the UE and the second authentication identifier of the UE satisfy the first binding relationship, attempting, by the authentication network element, to authenticate the second authentication identifier of the UE according to the extensible identity authentication protocol EAP, where if the authentication succeeds, the authentication result is that the network authentication between the UE and the DN succeeds.

In this embodiment of the present invention, after the authentication result is obtained, the method further includes: feeding back, by the authentication network element, the authentication result to the UE by using an EAP message.

According to the first aspect, in a possible implementation, the authentication network element is an authentication, authorization, accounting AAA server; and correspondingly, the AAA server obtains the first binding information; the AAA server receives the first authentication identifier of the UE that is sent by the SMF; the AAA server receives the second authentication identifier of the UE that is sent by the SMF; and the AAA server verifies, based on the first binding information, whether the first authentication identifier of the UE and the second authentication identifier of the UE satisfy the first binding relationship, to obtain the authentication result.

In this embodiment of the present invention, the obtaining, by the AAA server, the first binding information includes: obtaining, by the AAA server, the first binding information from the local storage.

In this implementation, if the authentication succeeds, the authentication result is that the network authentication between the UE and the DN succeeds; and the updating, by the authentication network element, the first binding information based on the first authentication identifier of the UE and the second authentication identifier of the UE includes: if the authentication succeeds, the authentication result is that the network authentication between the UE and the DN succeeds; and adding, by the AAA server, the binding relationship between the first authentication identifier of the UE and the second authentication identifier of the UE to the locally stored first binding information.

Optionally, the first authentication identifier in the first binding information includes: a subscriber permanent identifier SUPI and/or a permanent equipment identification PEI.

Optionally, the first authentication identifier in the first binding information includes: an external identifier, or an external identifier and a permanent equipment identification PEI; and the external identifier is obtained by translating a subscriber permanent identifier SUPI.

In this embodiment of the present invention, the receiving, by the AAA server, the second authentication identifier of the UE that is sent by the UE includes: receiving, by the AAA server, an EAP identity response message sent by the UE, where the EAP identity response message includes the second authentication identifier of the UE.

In this embodiment of the present invention, the receiving, by the AAA server, the second authentication identifier of the UE that is sent by the UE includes: receiving, by the AAA server, an EAP identity response message sent by the SMF, where the EAP identity response message includes the second authentication identifier of the UE, and the second authentication identifier of the UE is sent by the UE to the SMF by using a session establishment request.

According to the first aspect, in a possible implementation, before the verifying, by the AAA server based on the first binding information, whether the first authentication identifier of the UE and the second authentication identifier of the UE satisfy the first binding relationship, the method further includes: receiving, by the AAA server, IP information sent by the SMF, where the IP information is an IP address or an IP prefix generated by the SMF based on the first authentication identifier of the UE; and obtaining, by the AAA server, second binding information based on the first binding information, where the second binding information includes a second binding relationship between the IP information and the second authentication identifier; the receiving, by the AAA server, the second authentication identifier of the UE that is sent by the UE is specifically: receiving, by the AAA server, an IP packet sent by the UE, where the IP packet includes the second authentication identifier of the UE and the IP information of the UE; and the verifying, by the AAA server based on the first binding information, whether the first authentication identifier of the UE and the second authentication identifier of the UE satisfy the first binding relationship is specifically: verifying, by the AAA server, based on the second binding information, whether the IP address of the UE and the second authentication identifier of the UE satisfy the second binding relationship. According to the first aspect, in a possible implementation, the authentication network element is a session management function network element SMF; and correspondingly, the SMF receives the first authentication identifier sent by an access and mobility management function network element AMF; the SMF receives the second authentication identifier of the UE that is sent by the UE; and the SMF obtains the first binding information, and verifies, based on the first binding information, whether the first authentication identifier of the UE and the second authentication identifier of the UE satisfy the first binding relationship, to obtain the authentication result.

In this embodiment of the present invention, the obtaining, by the SMF, the binding information includes: obtaining, by the SMF, the binding information from the local storage.

In this possible implementation, if the authentication succeeds, the authentication result is that the network authentication between the UE and the DN succeeds; and the updating, by the authentication network element, the first binding information based on the first authentication identifier of the UE and the second authentication identifier of the UE includes: if the authentication succeeds, the authentication result is that the network authentication between the UE and the DN succeeds, and adding, by the SMF, the binding relationship between the first authentication identifier of the UE and the second authentication identifier of the UE to the locally stored first binding information.

In this embodiment of the present invention, the obtaining, by the session management function network element SMF, the binding information includes: receiving, by the SMF, the binding information sent by the unified data management network element UDM.

In this possible implementation, if the authentication succeeds, the authentication result is that the network authentication between the UE and the DN succeeds; and the updating, by the authentication network element, the first binding information based on the first authentication identifier of the UE and the second authentication identifier of the UE includes: if the authentication succeeds, the authentication result is that the network authentication between the UE and the DN succeeds; and instructing, by the SMF, the UDM to update the binding relationship stored in the UDM.

In this embodiment of the present invention, the receiving, by the SMF, the second authentication identifier of the UE that is sent by the UE includes:
receiving, by the SMF, a session establishment request sent by the UE, where the session establishment request includes the second authentication identifier of the UE.

The first authentication identifier includes: a subscriber permanent identifier SUPI and/or a permanent equipment identification PEI.

In this embodiment of the present invention, in the binding information, each first authentication identifier corresponds to at least one second authentication identifier; and the verifying, based on the binding information, whether the first authentication identifier of the UE and the second authentication identifier of the UE have the binding relationship includes: searching, by the SMF, for the binding information based on the first authentication identifier of the UE, to obtain the at least one second authentication identifier corresponding to the first authentication identifier of the UE; and verifying, by the SMF, whether the second authentication identifier of the UE is in the at least one corresponding second authentication identifier.

According to a second aspect, an embodiment of the present invention provides a network authentication method, described from a perspective of a session management function network element side. The method includes: receiving, by a session management function network element SMF, a first authentication identifier of UE that is sent by an AMF, where the first authentication identifier of the UE is an identifier that has been authenticated through network authentication between the UE and an authentication server function network element AUSF; receiving, by the SMF, a second authentication identifier of the UE that is sent by the UE; and sending, by the SMF, the first authentication identifier of the UE and the second authentication identifier of the UE to an authentication, authorization, accounting AAA server, so that the AAA server verifies, based on the first binding information, whether the first authentication identifier of the UE and the second authentication identifier of the UE satisfy a first binding relationship, where
the first binding information includes first binding relationships of one or more pairs of first authentication identifiers and second authentication identifiers; the first authentication identifier indicates an identifier used by the UE for network authentication with the AUSF, and the second authentication identifier indicates an identifier used by the UE when the UE requests network authentication on access to a data network DN.

In this embodiment of the present invention, the receiving, by the SMF, a second authentication identifier of the UE that is sent by the UE includes: receiving, by the SMF, a session establishment request sent by the UE, where the session establishment request includes the second authentication identifier of the UE.

In this embodiment of the present invention, the sending, by the SMF, the first authentication identifier of the UE and the second authentication identifier of the UE to an AAA server includes: sending, by the SMF, a request message to the AAA server, where the request message is used to request the AAA server to attempt to authenticate an identity of the UE, and the request message includes the first authentication identifier of the UE and the second authentication identifier of the UE.

In a possible embodiment, the first authentication identifier includes: a subscriber permanent identifier SUPI and/or a permanent equipment identification PEI.

In a possible embodiment, the first authentication identifier includes: an external identifier, or an external identifier and a permanent equipment identification PEI; the external identifier is obtained by translating a subscriber permanent identifier SUPI; the external identifier is carried in subscription data of a UDM; and the SMF obtains the subscription data from the UDM.

In this embodiment of the present invention, before the sending, by the SMF, the first authentication identifier of the UE and the second authentication identifier of the UE to an AAA server, the method further includes: obtaining, by the SMF, an authentication policy, where the authentication policy is used to instruct the SMF whether to send the first authentication identifier of the UE and the second authentication identifier of the UE to the AAA server; and the sending, by the SMF, the first authentication identifier of the UE and the second authentication identifier of the UE to an AAA server is specifically: when the authentication policy instructs the SMF to send the first authentication identifier of the UE and the second authentication identifier of the UE to the AAA server, sending, by the SMF, the first authentication identifier of the UE and the second authentication identifier of the UE to the AAA server.

In a possible embodiment, the authentication policy is stored in a local storage of the SMF; the authentication policy is carried in the session establishment request sent by the UE; or the authentication policy is carried in the subscription data sent by the UDM.

According to a third aspect, an embodiment of the present invention provides a network authentication method, described from a perspective of a session management function network element side. The method includes: receiving, by a session management function network element SMF, a first authentication identifier of UE that is sent by an AMF, where the first authentication identifier of the UE is an identifier that has been authenticated through network authentication between the UE and an authentication server function network element AUSF; determining, by the SMF, IP information for the first authentication identifier of the UE, where the IP information includes an IP address or an IP prefix; sending, by the SMF, the IP information to the UE, so that the UE generates an IP packet, where the IP packet includes the IP information and a second authentication identifier of the UE, where the second authentication identifier indicates an identifier used by the UE when the UE requests network authentication on access to a data network DN; and sending, by the SMF, the first authentication identifier of the UE and the IP information to an authentication, authorization, accounting AAA server, so that the AAA server obtains binding information based on the first authentication identifier of the UE and the IP information, where the binding information includes a binding relationship between the IP information and a second authentication identifier, where
the AAA server is configured to verify, based on the binding information, whether the IP information in the IP packet and the second authentication identifier of the UE satisfy the binding relationship.

According to a fourth aspect, an embodiment of the present invention provides a network authentication method, described from a perspective of a unified data management network element side. The method includes: receiving, by a unified data management network element UDM, a request of an authentication network element; and sending, by the UDM, first binding information to the authentication network element based on the request, where the first binding information includes first binding relationships of one or more pairs of first authentication identifiers and second authentication identifiers, the first authentication identifier indicates an identifier used by user equipment UE for network authentication with an authentication server function network element AUSF, and the second authentication identifier indicates an identifier used by the UE when the UE requests network authentication on access to a data network DN.

In this embodiment of the present invention, the sending, by the UDM, binding information to the authentication network element based on the request includes:
sending, by the UDM, subscription data to the authentication network element based on the request, where the subscription data includes the binding information. In this embodiment of the present invention, the method further includes: receiving, by the UDM, a binding information update request sent by the authentication network element; where the binding information update request includes a second binding relationship between the first authentication identifier of the UE and the second authentication identifier of the UE; and updating, by the UDM, the first binding information based on the binding information update request.

In this embodiment of the present invention, the updating, by the UDM, the first binding information based on the binding information update request includes: adding, by the UDM, the second binding relationship to the first binding information, to obtain second binding information. The first authentication identifier includes: a subscriber permanent identifier SUPI and/or a permanent equipment identification PEI.

The authentication network element includes: an authentication, authorization, accounting AAA server or a session management function network element SMF.

According to a fifth aspect, an embodiment of the present invention provides an authentication network element; and the authentication network element includes a processor, a memory, a transmitter, and a receiver; the processor, the memory, the transmitter, and the receiver are connected to each other; and the processor may be configured to read program code stored in the memory, to implement a function of the authentication network element according to the embodiments of the first aspect.

The receiver is configured to receive a request to access a data network DN by UE.

The receiver is further configured to receive a first authentication identifier of the UE and a second authentication identifier of the UE.

The first authentication identifier of the UE has been authenticated by an authentication server function network element AUSF; and the second authentication identifier of the UE is an identifier used by the UE to request to access the DN.

The processor is configured to verify, based on first binding information, whether the first authentication identifier of the UE and the second authentication identifier of the UE satisfy the first binding relationship, to obtain an authentication result, where the first binding information includes first binding relationships of one or more pairs of first authentication identifiers and second authentication identifiers, the first authentication identifier in the first binding information indicates an identifier used for authentication performed by the AUSF, and the second authentication identifier in the first binding information indicates an identifier used for authentication on access of the UE to the DN.

The transmitter is configured to send the authentication result to the UE.

According to a sixth aspect, an embodiment of the present invention provides another authentication network element, and the authentication network element includes an obtaining module, an authentication module, and a sending module.

The obtaining module is configured to obtain first binding information, where the first binding information includes first binding relationships of one or more pairs of first authentication identifiers and second authentication identifiers, the first authentication identifier indicates an identifier used by the UE for network authentication with an authentication server function network element AUSF, and the second authentication identifier indicates an identifier used by the UE when the UE requests network authentication on access to a data network DN; the obtaining module is further configured to receive a first authentication identifier sent by the AMF, where the first authentication identifier of the UE is an identifier that has been authenticated through network authentication between the UE and the AUSF; and the obtaining module is further configured to receive a second authentication identifier of the UE that is sent by the UE.

The authentication module is configured to verify, based on the first binding information, whether the first authentication identifier of the UE and the second authentication identifier of the UE satisfy the first binding relationship, to obtain an authentication result.

The sending module is configured to send the authentication result to the UE.

According to a seventh aspect, an embodiment of the present invention provides a session management function network element, and the session management function network element includes a receiving module, a sending module, and a determining module. The receiving module is configured to receive a first authentication identifier of UE that is sent by an AMF, where the first authentication identifier of the UE is an identifier that has been authenticated through network authentication between the UE and an authentication server function network element AUSF; and the receiving module is further configured to receive a second authentication identifier of the UE that is sent by the UE. The sending module is configured to send the first authentication identifier of the UE and the second authentication identifier of the UE to an authentication, authorization, accounting AAA server, so that the AAA server verifies, based on the first binding information, whether the first authentication identifier of the UE and the second authentication identifier of the UE satisfy a first binding relationship. The receiving module is further configured to receive an authentication result sent by the AAA server.

According to an eighth aspect, an embodiment of the present invention provides a readable nonvolatile storage medium storing a computer instruction, where
the computer instruction is executed to implement the method according to the first aspect;
the computer instruction is executed to implement the method according to the second aspect;
the computer instruction is executed to implement the method according to the third aspect; or
the computer instruction is executed to implement the method according to the fourth aspect.

According to a ninth aspect, an embodiment of the present invention provides a UDM apparatus; and UDM apparatus includes a processor, a memory, a transmitter, and a receiver; and the processor, the memory, the transmitter, and the receiver are connected to each other. The receiver is configured to receive a request of an authentication network element, so that the UDM sends first binding information to the authentication network element based on the request, where the first binding information includes first binding relationships of one or more pairs of first authentication identifiers and second authentication identifiers, the first authentication identifier indicates an identifier used by user equipment UE for network authentication with an authentication server function network element AUSF, and the second authentication identifier indicates an identifier used by the UE when the UE requests network authentication on access to a data network DN.

In this embodiment of the present invention, that the transmitter is configured to send binding information to the authentication network element based on the request includes: the transmitter is configured to send subscription data to the authentication network element based on the request, where the subscription data includes the binding information.

In this embodiment of the present invention, the receiver is configured to receive a binding information update request sent by the authentication network element, where the binding information update request includes a second binding relationship between a first authentication identifier of the UE and a second authentication identifier of the UE; and the processor is configured to update the first binding information based on the binding information update request. In this embodiment of the present invention, that the processor is configured to update the first binding information based on the binding information update request includes: the processor is configured to add the second binding relationship to the first binding information, to obtain second binding information.

According to a tenth aspect, an embodiment of the present invention provides another UDM apparatus, including a sending module, a receiving module, and an update module. The receiving module is configured to receive a request of an authentication network element. The sending module is configured to send first binding information to the authentication network element based on the request, where the first binding information includes first binding relationships of one or more pairs of first authentication identifiers and second authentication identifiers, the first authentication identifier indicates an identifier used by user equipment UE for network authentication with an authentication server function network element AUSF, and the second authentication identifier indicates an identifier used by the UE when the UE requests network authentication on access to a data network DN.

According to an eleventh aspect, an embodiment of the present invention provides a computer program product. When the computer program product is run on a computer, the computer program product is executed to implement the method according to the first aspect, executed to implement the method according to the second aspect, executed to implement the method according to the third aspect, or executed to implement the method according to the fourth aspect.

Through implementation of the embodiments of the present invention, the authentication network element stores the binding relationship between the first authentication identifier and the second authentication identifier. Primary authentication (the network authentication between the UE and the AUSF) on the first authentication identifier of the UE succeeds, so that when the UE needs to access an operator network, the authentication network element can determine whether the second authentication identifier of the UE is valid by verifying whether the second authentication identifier provided by the UE is bound to the authenticated first authentication identifier, to obtain an authentication result of secondary authentication (the network authentication that is requested by the UE and that is on access to the DN). Therefore, the implementation of the embodiments of the present invention can obviously reduce communication load, reduce resource consumption, and improve authentication efficiency.

### BRIEF DESCRIPTION OF DRAWINGS

FIG. 1 is a schematic diagram of a mobile communications network architecture according to an embodiment of the present invention;
FIG. 2 is a schematic flowchart of secondary authentication in the EAP-PSK standard in the prior art;
FIG. 3 is a schematic flowchart of a network authentication method according to an embodiment of the present invention;
FIG. 4a is a schematic flowchart of an application scenario according to an embodiment of the present invention;
FIG. 4b is a schematic flowchart of another application scenario according to an embodiment of the present invention;
FIG. 4c is a schematic flowchart of another application scenario according to an embodiment of the present invention;
FIG. 5 is a schematic diagram of one type of binding information according to an embodiment of the present invention;
FIG. 6 is a schematic diagram of several types of binding information according to an embodiment of the present invention;
FIG. 7 is a schematic diagram of several types of binding information according to an embodiment of the present invention;
FIG. 8 is a schematic flowchart of another network authentication method according to an embodiment of the present invention;
FIG. 9 is a schematic flowchart of another network authentication method according to an embodiment of the present invention;
FIG. 10 is a schematic flowchart of another network authentication method according to an embodiment of the present invention;
FIG. 11 is a schematic structural diagram of an authentication network element according to an embodiment of the present invention;
FIG. 12 is a schematic structural diagram of an AAA server according to an embodiment of the present invention;
FIG. 13 is a schematic structural diagram of an SMF apparatus according to an embodiment of the present invention;
FIG. 14 is a schematic structural diagram of another SMF apparatus according to an embodiment of the present invention;
FIG. 15 is a schematic structural diagram of a UDM apparatus according to an embodiment of the present invention;
FIG. 16 is a schematic structural diagram of another UDM apparatus according to an embodiment of the present invention; and
FIG. 17A and FIG. 17B are a schematic flowchart of another network authentication method according to an embodiment of the present invention.

### DESCRIPTION OF EMBODIMENTS

The technical solutions according to embodiments of the present invention are clearly described in the following with reference to the accompanying drawings.

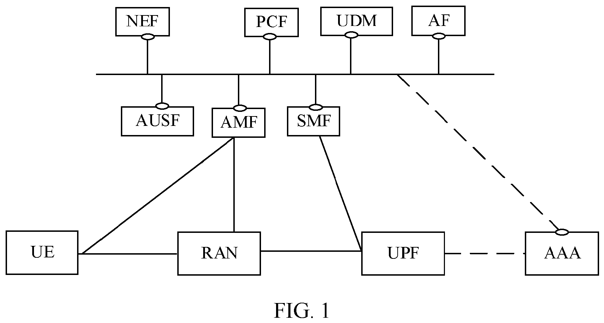

For ease of understanding the solutions, a network architecture to which the solutions in the embodiments of this application may be applied is first described with reference to a related accompanying drawing by using an example. FIG. 1 shows a future mobile communications network architecture. The network architecture includes user equipment, an access network device, and an operator network (for example, a 3GPP network such as 4G or 5G). The operator network further includes a core network and a data network, and the user equipment accesses the operator network by using the access network node. Details are described as follows:
User equipment (User Equipment, UE): The UE is a logical entity, and specifically, the UE may be any one of a terminal device (Terminal Equipment), a communications device (Communication Device), or an internet of things (Internet of Things, IoT) device. The terminal device may be a smartphone (smart phone), a smart watch (smart watch), a smart tablet (smart tablet), or the like. The communications device may be a server, a gateway (Gateway, GW), a controller, or the like. The internet of things device may be a sensor, an electricity meter, a water meter, or the like. Radio access network (Radio Access Network, RAN): The RAN is responsible for access of UE, and the RAN may be a base station, a wireless fidelity (Wireless Fidelity, Wi-Fi) access point, a Bluetooth access point, or the like. In this specification, a device that is in the RAN and that is responsible for access of UE may be referred to as an access network device for short.

Data network (Data network, DN): The data network DN is also referred to as a PDN (Packet Data Network). The DN may be an external network of an operator. Alternatively, the DN may be a network controlled by an operator, and is configured to provide a service to a user. UE may access the DN by accessing an operator network, and use a service provided by an operator or a third party on the DN. There may be a plurality of DNs, and a service provided by an operator or a third party may be deployed on the DN. For example, a DN is a private network of an intelligent factory, a sensor mounted in a workshop of the intelligent factory serves as UE, and a control server of the sensor is deployed in the DN. The UE communicates with the control server, the UE obtains an instruction of the control server, and transfers collected data to the control server according to the instruction. For another example, a DN is an internal working network of a company, a terminal of an employee of the company serves as UE, and the UE may access an internal IT resource of the company. In the embodiments of the present invention, the DN includes an AAA server, and after secondary authentication between the UE and the AAA server succeeds, the UE can access the DN.

Authentication, authorization, accounting server (Authentication, Authorization, Accounting server, AAA server): A main objective of the AAA server is to manage users who can access the DN, where authentication (Authentication) means to attempt to authenticate whether a user can obtain access permission, authorization (Authorization) means to authorize a user to use specific services, and accounting (Accounting) means to record usage of a network resource by a user. It should be noted that the AAA server in the embodiments of the present invention has an authentication function, but is not limited to having an authorization function and an accounting function.

Core network (core network, CN): As a bearer network, the CN provides an interface to the DN, and provides a communication connection, authentication, management, policy control for UE, and completes data service carrying, and the like. The CN further includes an access and mobility management network element, a session management network element, an authentication server network element, a policy control node, an application function network element, a user plane node, and the like. Related descriptions are specifically as follows:
Access and mobility management network element (Access and Mobility Management Function, AMF): The AMF is a control plane network element provided by an operator, and is responsible for access control and mobility management for access of UE to an operator network.

Session management network element (Session Management Function, SMF): The SMF is a control plane network element provided by an operator, and is responsible for managing a session of a data packet of UE. A packet data unit session (Packet Data Unit session, also referred to as a PDU session) is a channel used to transmit a PDU. The UE and the DN need to send a PDU to each other by using the PDU session. The SMF is responsible for establishing and managing the PDU session, and a common type of the PDU is an IP packet.

Authentication server network element (Authentication Server Function, AUSF): The authentication server function network element AUSF is a control plane network element provided by an operator, and is used for primary authentication (to be specific, authentication performed by an operator network on a subscriber of the network). The AUSF may be separately deployed as an independent logical function entity, or may be integrated into a device such as an AMF/SMF. Unified data management network element (Unified Data Manager, UDM): The UDM is a control plane network element provided by an operator, and is responsible for storing a subscriber permanent identifier (Subscriber Permanent Identifier, SUPI), registration information, a credential (credential), and subscription data of an operator network. The data is used for authentication and authorization on access of UE to the operator network.

Network exposure function network element (Network Exposure Function, NEF): The NEF is a control plane network element provided by an operator. The NEF exposes an external interface of an operator network to a third party in a secure manner. When a network element such as an SMF needs to communicate with a third-party network element, the NEF may be used as a relay for communication. When the NEF is used as the relay, the NEF can translate internal and external identifiers. For example, when a SUPI of UE is sent from the operator network to a third party, the NEF may translate the SUPI into an external ID corresponding to the SUPI. Otherwise, when an external ID is sent to the operator network, the NEF may translate the external ID into a SUPI. Application function network element (Application Function, AF): The AF is configured to: store a service security requirement, and provide information about policy determining.

User plane node (User Plane Function, UPF): The UPF may be a gateway, a server, a controller, a user plane function network element, or the like. The UPF may be set inside an operation network, or may be set outside an operation network. The UPF is a user plane network element provided by an operator, and is a gateway for communication between the operator network and a DN.

The following describes concepts of primary authentication and secondary authentication in the embodiments of the present invention.

Primary authentication (primary authentication): When UE accesses an operator network, the operator network first needs to perform primary authentication on the UE. The UE can access the operator network only after the primary authentication succeeds, and then request to establish a PDU session, to access a DN. For example, primary authentication is performed between the UE and an AUSF in the operator network. In the embodiments of the present invention, an identifier used by the UE for the primary authentication with the AUSF may be referred to as a primary ID (or a first authentication identifier), and the primary ID may be a subscriber permanent identifier (Subscriber Permanent Identifier, SUPI), a permanent equipment identification (Permanent Equipment Identification, PEI), or the like. For example, the SUPI may be stored in a SIM card, a format of the SUPI is an international mobile subscriber identity (International Mobile Subscriber Identity, IMSI), and the primary authentication between the UE and the AUSF may be performed based on the SUPI. If the primary authentication succeeds, it proves that the SUPI (such as the SIM card) provided by the UE is valid and authentic, and not counterfeit. For another example, if the PEI indicates a device ID of the UE, a format of the PEI is an international mobile equipment identity (International Mobile Equipment Identity, IMEI), and the primary authentication between the UE and the AUSF may be performed based on the PEI, it proves that the PEI provided by the UE is valid and authentic. After the primary authentication succeeds, the UE can access the operator network, and further request to access a DN.

Secondary authentication (secondary authentication): After the primary authentication on the UE succeeds, authentication further needs to be performed on some UEs or some DNs. Only after the authentication on the UE succeeds, the UE is allowed to access the DN. The further authentication may be referred to as secondary authentication. For example, secondary authentication between the UE and an AAA server in the operator network is performed. In the embodiments of the present invention, an identifier used by the UE for the secondary authentication with the AAA server may be referred to as a secondary ID (or a second authentication identifier). The secondary ID is usually different from the primary ID, and a format of the secondary ID is flexible. For example, the secondary ID may be a user account (such as a bank card account or an application software account), a session initiation protocol uniform resource identifier (Session Initiation Protocol Uniform Resource Identifier, SIPURI), or the like. For another example, a secondary ID of a sensor (namely, UE) in a private network of an intelligent factory may be a sensor ID allocated by the factory; a secondary ID of an employee (namely, UE) in an internal working network of a company may be an employee ID of the employee in the company, or the like. If the secondary authentication on the UE succeeds, it proves that the secondary ID provided by the UE is valid and authentic, and authentication on access to the DN succeeds. It should be noted that, after the primary authentication succeeds and the UE accesses the DN, the UE may be directly allowed to access the DN, or the DN may further perform authorization check on the UE, for example, check whether the UE is in arrears.

When the operator network is a 5G network, hardware infrastructure in the communications network may be divided into a plurality of virtual end-to-end networks, referred to as slices. A process of each network slice from UE to a RAN to a CN is logically isolated, to adapt to different requirements of various types of services. One slice may include one or more DNs. A service deployed on the slice may be provided by a single provider. For example, one slice is dedicated to a third-party company, and the slice includes a DN used for an intelligent factory and a DN used for remote office work of an employee. In this case, authentication on access to the plurality of DNs may be unified to access authentication at a slice level. After slice access authentication on UE succeeds, the UE is allowed to access the DN in the slice. After primary authentication on access to the 5G network succeeds, secondary authentication on the UE needs to be further performed, so that the UE is allowed to access the DN in the slice.

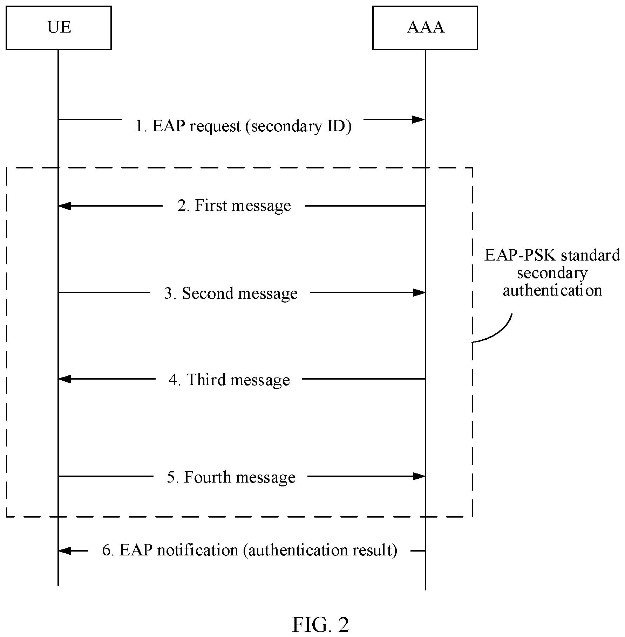

In the prior art, UE may access a DN based on the extensible authentication protocol (Extensible Authentication Protocol, EAP). For example, secondary authentication on the UE is performed based on the extensible authentication protocol-pre-shared key (pre-shared key, PSK) standard (namely, the EAP-PSK standard). Referring to FIG. 2, an authentication procedure is as follows:
1. When secondary authentication needs to be performed, the UE initiates an EAP request to the AAA server, where the request carries a secondary ID.
2. The AAA server sends a first message to the UE, where the first message includes |Flags||RAND_S||ID_S, where
   Flags is used to indicate a message number, RAND_S is a 16-byte random number related to AAA server, and ID_S is an ID of the AAA server.
3. The UE sends a second message to the AAA server, where the second message includes Flags||RAND_S||RAND_P||MAC_P||ID_P, where
   Flags is used to indicate a message number, RAND_S is a 16-byte random number related to AAA, RAND_P is a 16-byte random number related to the UE, MAC_P is a message verification code provided for AAA to attempt to authenticate the UE, and a calculation rule is MAC_P = CMAC-AES-128 (AK, ID_P||ID_S||RAND_S||RAND_P), where AK is an authentication key pre-shared by the UE and AAA, CMAC-AES-128 is a function used to generate the message verification code, and ID_P is an ID of the UE.
4. The AAA server sends a first message to the UE, where the first message includes Flags)||RAND_S||MAC_S||PCHANNEL_S_0, where
   Flags is used to indicate a message number, RAND_S is a 16-byte random number related to AAA, MAC_S is a message verification code provided for the UE to attempt to authenticate the AAA server, a calculation rule is MAC_S = CMAC-AES-128(AK, ID_S||RAND_P), and P_CHANNEL_S_0 is a parameter used to establish a protected communications channel.
5. The UE sends a fourth message to the AAA server, where the fourth message includes |Flags||RAND_S||PCHANNEL_P_1, where Flags is used to indicate a message number, RAND_S is a 16-byte random number related to AAA, and P_CHANNEL_P_1 is a parameter used to establish a protected communications channel.
6. The AAA completes the secondary authentication on the UE by using the foregoing four communication messages. The AAA server sends an EAP notification to the UE, where the notification includes an authentication result.

It can be learned that, in the prior art, a process of secondary authentication on access to a DN by the UE requires a plurality of round-trip messages (at least four communication messages) for authentication, and the authentication process also relates to calculation such as hash verification or certificate verification. Communication load is heavy, computing resource overheads are high, and authentication efficiency is relatively low.

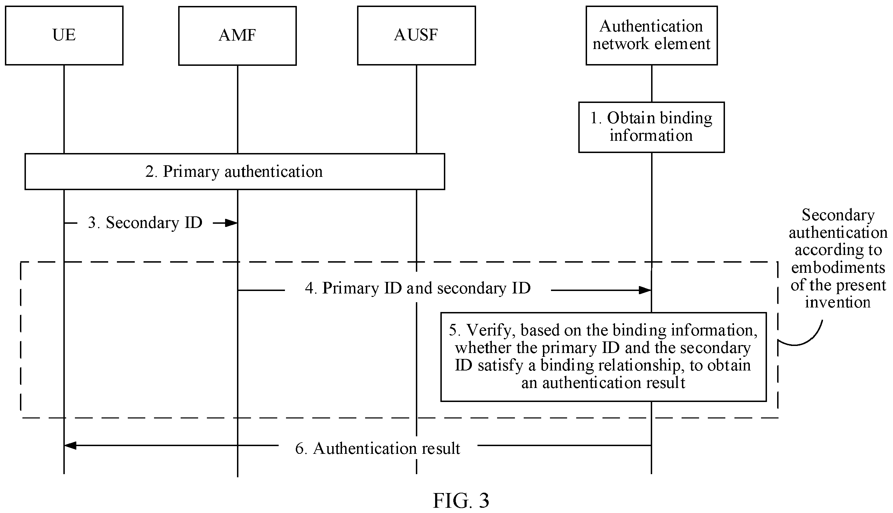

To reduce the communication load, reduce the resource overheads, and improve the authentication efficiency, an embodiment of the present invention provides a network authentication method. Referring to FIG. 3, the method includes the following steps.
1. An authentication network element obtains binding information.
   In this embodiment of the present invention, a primary ID (for example, a SUPI or a PEI) and a secondary ID that are used by UE are usually relatively fixed. Therefore, the primary ID and the secondary ID are associated with each other, and a binding relationship based on the association between the primary ID and the secondary ID may be pre-established.
   The authentication network element may pre-obtain the binding information. For example, the authentication network element may obtain the binding information from a local storage, or the authentication network element may obtain the binding information from another network element (such as a UDM) that stores the binding information. The binding information may include binding relationships of one or more pairs of primary IDs and secondary IDs. In a specific embodiment, the primary ID is an identifier used by the UE for network authentication (namely, primary authentication) with an AUSF, and the secondary ID is an identifier used by the UE for network authentication (namely, secondary authentication) with the authentication network element of a DN. The authentication network element may be specifically an SMF, an AAA server, or another network element.
2. Perform primary authentication between the UE and the AUSF, and an AMF obtains the primary ID of the UE.
   When the authentication is started, the AMF obtains the primary ID of the UE. If the authentication succeeds, the AMF determines that the primary ID of the UE is authentic and valid. To be specific, the primary ID of the UE has been authenticated through the primary authentication between the UE and the AUSF.
3. The UE sends the secondary ID of the UE to the AMF
   In a specific embodiment, the UE may send a PDU session establishment request to the AMF, and the PDU session establishment request carries the secondary ID.
   In another specific embodiment, after a bearer for a PDU session has been established, the UE sends an IP packet to the AMF, and the IP packet carries the secondary ID.
   In another specific embodiment, the UE may send an identity response to the AMF based on an identity request transmitted by the AMF, and the identity response carries the secondary ID.
4. The AMF sends the primary ID of the UE and the secondary ID of the UE to the authentication network element.
   In a possible embodiment, the AMF may send the primary ID of the UE and the secondary ID of the UE to the authentication network element by using a same message, or the AMF may separately send the primary ID of the UE and the secondary ID of the UE to the authentication network element by using different messages.
   In a possible embodiment, the AMF may send the primary ID of the UE and the secondary ID of the UE to the authentication network element by using a same message, or the AMF may separately send the primary ID of the UE and the secondary ID of the UE to the authentication network element by using different messages (at the same time or at different time).
   In a possible embodiment, the AMF may first send the primary ID of the UE and the secondary ID of the UE to another network element (for example, an SMF) (at the same time or at different time), and then the another network element sends the primary ID of the UE and the secondary ID of the UE to the AAA server.
5. The authentication network element verifies, based on the binding information, whether the primary ID of the UE and the secondary ID of the UE satisfy the binding relationship, to obtain an authentication result.
   In a specific implementation, after receiving the primary ID of the UE and the secondary ID of the UE, the authentication network element searches the stored binding information based on the primary ID of the UE. If a binding relationship corresponding to the primary ID of the UE can be found, the authentication network element determines whether the secondary ID of the UE exists in the binding relationship. If the secondary ID of the UE exists in the binding relationship, the authentication succeeds, and the authentication result is that secondary authentication between the UE and the DN succeeds (access to the DN succeeds). If no secondary ID of the UE exists in the binding relationship, the authentication fails, and the authentication result is that secondary authentication between the UE and the DN fails. It should be noted that in different application scenarios, when the secondary authentication succeeds or the secondary authentication fails, the authentication network element may further perform different processing on the authentication result of the UE, and descriptions are further provided below.
6. The authentication network element sends the authentication result to the UE.

In a specific implementation, the authentication network element may notify the UE of the authentication result by using an EAP notification message.

It should be noted that, in a possible embodiment of the present invention, in the foregoing descriptions, the AMF may be an independent network element, or the AMF may be integrated into another network element (for example, an SMF or an AUSF). In addition, in a possible embodiment, another network element may alternatively serve as the AMF. This is not limited in the present invention.

Through implementation of this embodiment of the present invention, the authentication network element stores the binding relationship between the secondary ID of the UE and the primary ID of the UE. Because the primary ID has been authenticated through the primary authentication, when the UE needs to access an operator network, the authentication network element can determine whether the secondary ID of the UE is valid by verifying whether the secondary ID provided by the UE is bound to the authenticated primary ID, to obtain the authentication result of the secondary authentication. It can be learned that, in the secondary authentication process in this embodiment of the present invention, only one message that carries the primary ID and the secondary ID in step 4 is required, and calculation overheads spent by the authentication network element are merely for determining whether the primary ID and the secondary ID of the UE have the binding relationship. Therefore, the implementation of this embodiment of the present invention can obviously reduce communication load, reduce resource consumption, and improve authentication efficiency.

The following describes, by using examples, authentication results of secondary authentication that are obtained in three application scenarios of the embodiments.

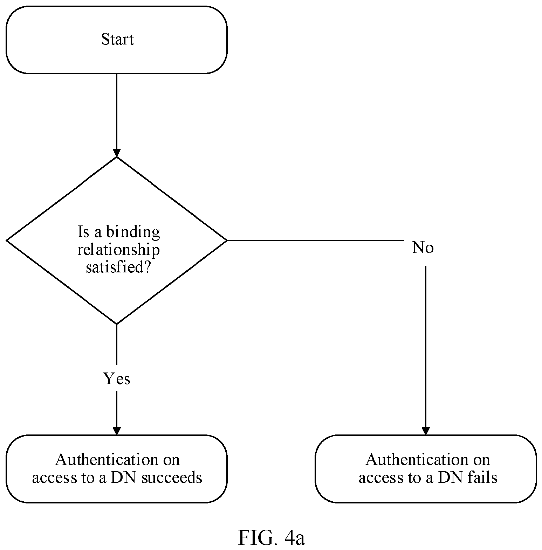

Referring to FIG. 4a, in a first application scenario, after the secondary authentication is started, if the authentication network element detects that the primary ID of the UE and the secondary ID of the UE satisfy a binding relationship, the authentication result is that authentication on access to the DN succeeds (to be specific, network authentication between the UE and the DN succeeds, similarly hereinafter). If the authentication network element detects that the primary ID of the UE and the secondary ID of the UE do not satisfy the binding relationship, the authentication result is that authentication on access to the DN fails (to be specific, network authentication between the UE and the DN fails, similarly hereinafter).

It can be learned that in this application scenario, the network authentication method provided in this embodiment of the present invention completely replaces a conventional authentication method (for example, an EAP-PSK authentication method) in the secondary authentication. In the entire authentication process, regardless of whether the authentication succeeds or fails, costs of the entire authentication process are very low. This can obviously reduce communication load and resource overheads, and improve authentication efficiency.

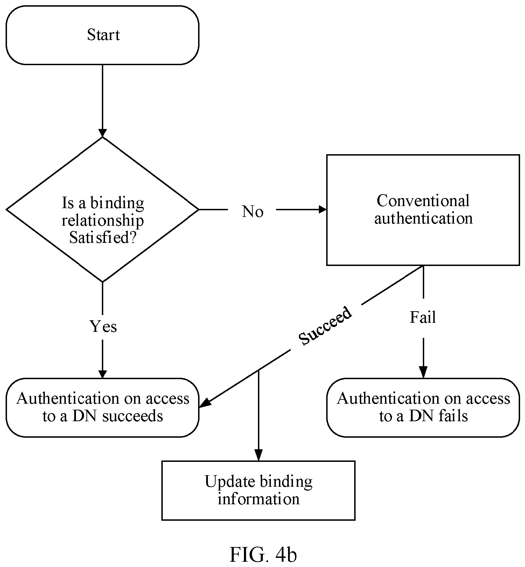

Referring to FIG. 4b, in a second application scenario, after the secondary authentication is started, if the authentication network element detects that the primary ID of the UE and the secondary ID of the UE satisfy a binding relationship, the authentication result is that authentication on access to the DN succeeds. If the authentication network element detects that the primary ID of the UE and the secondary ID of the UE do not satisfy the binding relationship, the authentication network element attempts, to authenticate the secondary ID of the UE according to a conventional authentication method (for example, an EAP-PSK authentication method). If the authentication succeeds, a final authentication result is that authentication on access to the DN succeeds. In this case, the authentication network element updates the binding information by using the primary ID of the UE and the secondary ID of the UE (for example, adds the binding relationship between the primary ID of the UE and the secondary ID of the UE to the binding information), so that subsequently, the authentication network element performs secondary authentication on the UE by using the updated binding information. If the authentication fails, a final authentication result is that authentication on access to the DN fails.

It should be noted that the updating, by the authentication network element, the binding information by using the primary ID of the UE and the secondary ID of the UE is specifically as follows: If the binding information is originally stored in the local storage of the authentication network element, the authentication network element updates the binding information in the local storage by using the primary ID of the UE and the secondary ID of the UE. If the binding information is originally stored in another network element (for example, the UDM), the authentication network element may send the binding relationship between the primary ID of the UE and the secondary ID of the UE to the network element, so that the network element updates the binding information.

It can be learned that in this application scenario, the network authentication method provided in this embodiment of the present invention is partially combined with the conventional authentication method in the secondary authentication. This application scenario is applicable to a case in which the binding relationship is changed. For example, when a user of the DN changes a SIM card, a mobile phone device, a bank card, or the like, because the primary ID of the UE is changed, the binding relationship also needs to be correspondingly changed. When the secondary authentication succeeds, application of the network authentication method provided in this embodiment of the present invention can lower costs of the authentication process, and obviously reduce communication load and resource overheads.

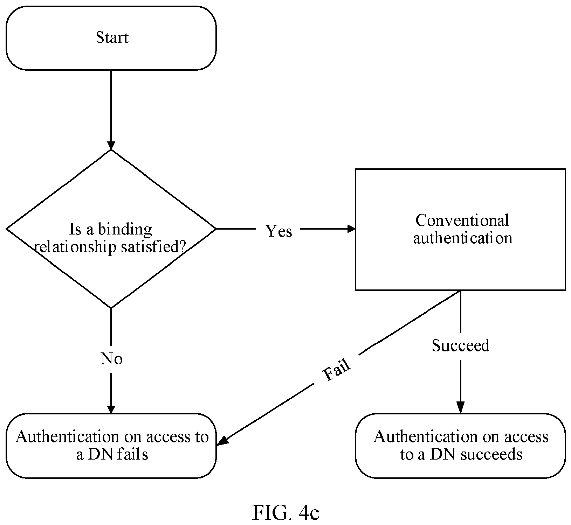

Referring to FIG. 4c, in a third application scenario, after the secondary authentication is started, if the authentication network element detects that the primary ID of the UE and the secondary ID of the UE do not satisfy a binding relationship, the authentication result is that authentication on access to the DN fails. If the authentication network element detects that the primary ID of the UE and the secondary ID of the UE satisfy the binding relationship, the authentication network element further attempts to authenticate the secondary ID of the UE according to a conventional authentication method (for example, an EAP-PSK authentication method). If the authentication succeeds, a final authentication result is that authentication on access to the DN succeeds. If the authentication fails, a final authentication result is that authentication on access to the DN fails.

It can be learned that in this application scenario, the network authentication method provided in this embodiment of the present invention is partially combined with the conventional authentication method in the secondary authentication. When the secondary authentication fails, application of the network authentication method provided in this embodiment of the present invention can lower costs of the authentication process, and obviously reduce communication load and resource overheads. When the secondary authentication succeeds, application of combining the network authentication method provided in this embodiment of the present invention and the conventional authentication method can form double authentication protection, thereby facilitating an improvement in security of the secondary authentication.

The following describes some implementations of the binding information in the embodiments of the present invention by using examples.

In the embodiments of the present invention, the binding information includes binding relationships of one or more pairs of primary IDs and secondary IDs. In a specific implementation, the binding information may be a database, a mapping table (or referred to as a binding relationship table), or the like. Correspondingly, the binding relationship may be a data element in the database, an entry in the mapping table, or the like.

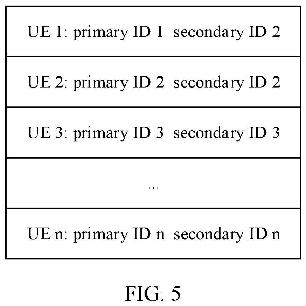

FIG. 5 is a schematic diagram of binding information according to an embodiment of the present invention. The binding information includes binding relationships of a plurality of UEs (UE 1, UE 2, UE 3..., and uUE n), the binding relationship of the UE 1 is (a secondary ID 1, a primary ID 1), the binding relationship of the UE 2 is (a secondary ID 2, a primary ID 2), the binding relationship of the UE n is (a secondary ID n, a primary ID n), and the rest can be deduced by analogy. For example, in secondary authentication, a primary ID of UE that is obtained by an authentication network element is the primary ID 1, and a secondary ID of the UE that is obtained is the secondary ID 1. Because the primary ID 1 and the secondary ID 1 satisfy the binding relationship, the secondary authentication succeeds. For another example, in secondary authentication, a primary ID of UE that is obtained by an authentication network element is a primary ID 3, and a secondary ID of the UE that is obtained is the secondary ID 1. Because the primary ID 3 and the secondary ID 1 do not satisfy the binding relationship, the secondary authentication fails.

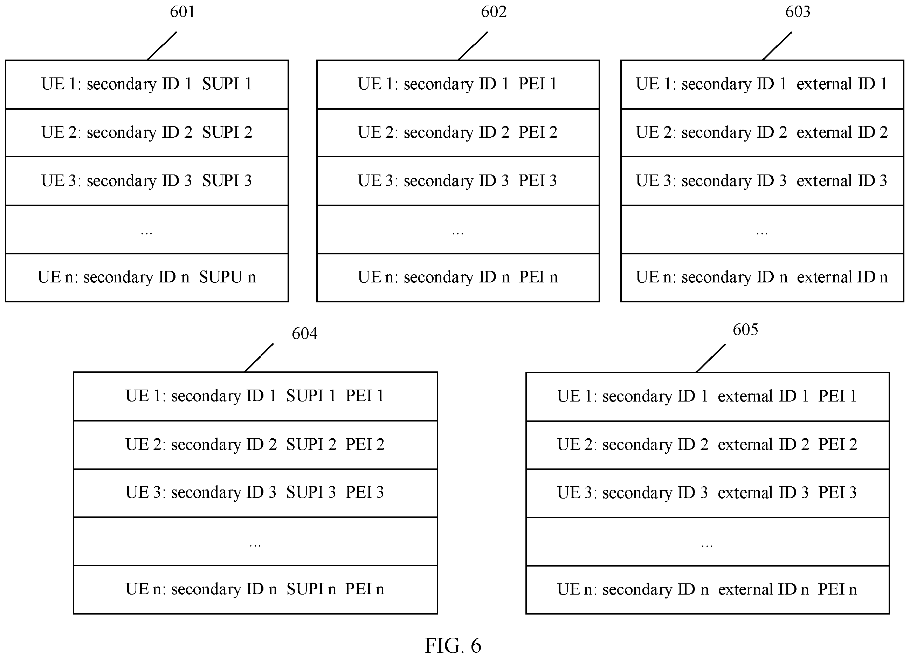

In a specific implementation, the primary ID in the binding information may be an independent SUPI (as shown in 601 in FIG. 6), an independent PEI (as shown in 602 in FIG. 6), or an independent external ID (as shown in 603 in FIG. 6); or may be a combination of an SUPI and a PEI (as shown in 604 in FIG. 6), or a combination of a PEI and an external ID (as shown in 605 in FIG. 6). In a specific implementation, the primary ID in the binding information may alternatively be a combination of an SUPI (or a PEI, or an external ID) and other information, or a combination of an SUPI (or a PEI, or an external ID) and an address, for example, a combination of the SUPI (or the PEI, or the external ID) and a PDU session address. In a specific implementation, the primary ID in the binding information may alternatively be a single ID obtained by mapping the foregoing combination. In a specific implementation, the primary ID may alternatively be in a form of a random number, to protect confidentiality of the ID.

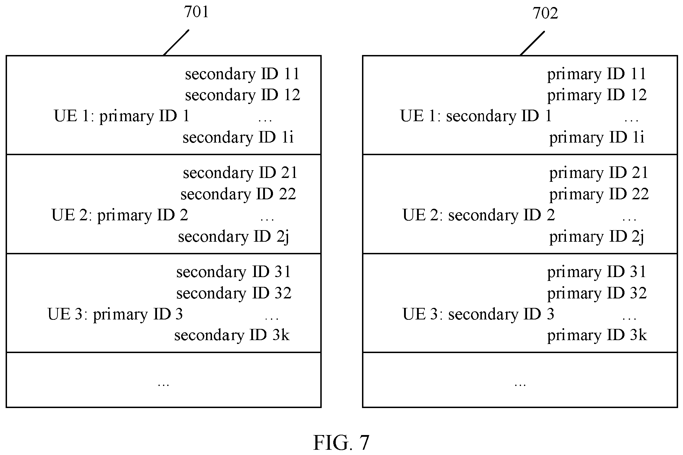

FIG. 7 is a schematic diagram of another type of binding information according to an embodiment of the present invention. The binding information includes binding relationships of a plurality of UEs (UE 1, UE 2, UE 3..., and uUE n). For a binding relationship of each UE, m primary IDs may be associated with n secondary IDs. As shown in 701 in FIG. 7, the binding relationship of the UE 1 is (a primary ID 1, a secondary ID 11, a secondary ID 12, ..., and a secondary ID 1i), the binding relationship of the UE 2 is (a primary ID 2, a secondary ID 21, a secondary ID 22, ..., and a secondary ID 2j), the binding relationship of the UE 3 is (a primary ID 3, a secondary ID 31, a secondary ID 32, ..., and a secondary ID 3k), and the rest can be deduced by analogy. For another example, as shown in 702 in FIG. 7, the binding relationship of the UE 1 is (a secondary ID 1, a primary ID 11, a primary ID 12, ..., and a primary ID 1i), the binding relationship of the UE 2 is (a secondary ID 2, a primary ID 21, a primary ID 22, ..., and a primary ID 2j), the binding relationship of the UE 3 is (a secondary ID 3, a primary ID 31, a primary ID 32, ..., and a primary ID 3j), and the rest can be deduced by analogy.

It can be understood that, in a specific implementation of FIG. 7, the primary ID in the binding information may be an independent SUPI, an independent PEI, or an independent external ID; or may be a combination of an SUPI and a PEI, a combination of a PEI and an external ID, or the like.

The following specifically describes the network authentication method provided in the embodiments of the present invention.

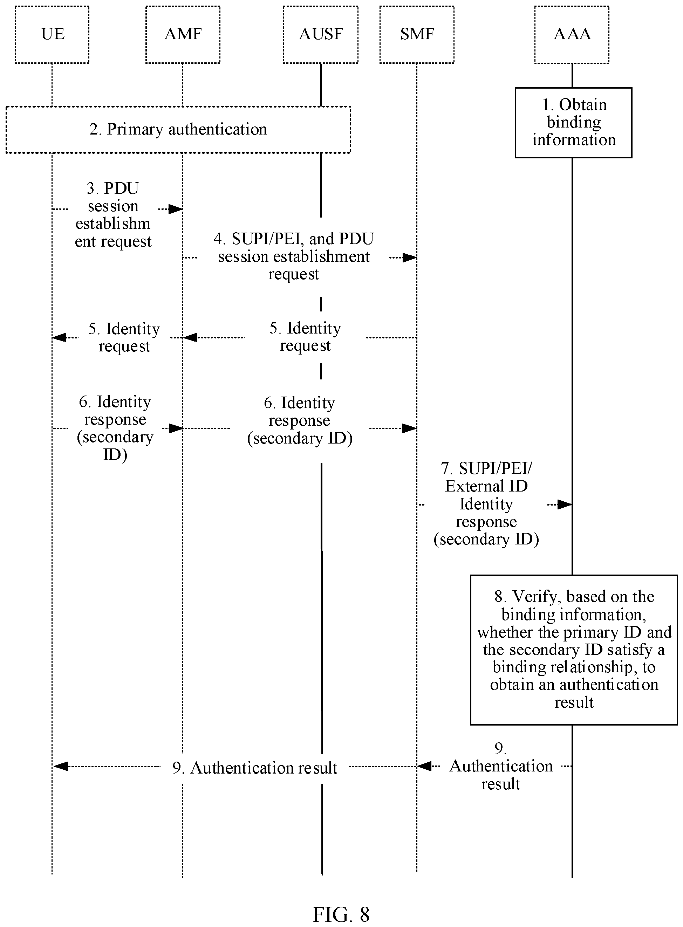

Referring to FIG. 8, an embodiment of the present invention provides a network authentication method, including but not limited to the following steps.
1. An AAA server obtains binding information.
   In a specific embodiment, the AAA server may prestore the binding information. In another specific embodiment, the AAA server may pre-obtain the binding information from another network element (for example, a UDM) that stores the binding information. For the binding information, refer to the descriptions of the embodiments in FIG. 5 to FIG. 7.
2. Perform primary authentication between UE and an AUSF, and an AMF obtains a primary ID of the UE.
   When the authentication is started, the AMF obtains the primary ID of the UE. If the authentication succeeds, the AMF determines that the primary ID of the UE is authentic and valid.
   Specifically, the primary authentication between the UE and the AUSF is performed based on an SUPI of the UE or a PEI of the UE. After the authentication succeeds, the AMF obtains the SUPI and/or the PEI of the UE.
3. The UE initiates a PDU session establishment request to the AMF; and correspondingly, the AMF receives the PDU session establishment request.
4. The AMF sends the SUPI and/or the PEI, and the PDU session establishment request to an SMF. In a specific embodiment, the AMF separately sends the PDU session establishment request of the UE and the authenticated SUPI or PEI of the UE to the SMF. In other words, after step 2, the AMF sends the SUPI or the PEI of the UE to the SMF. After step 3, the AMF forwards the PDU session establishment request of the UE to the SMF.
   In another specific embodiment, the AMF adds the authenticated SUPI or PEI of the UE to the PDU session establishment request, and sends the request to the SMF. In other words, after step 2, the AMF stores the SUPI or the PEI of the UE. After step 3, the AMF adds the SUPI or the PEI of the UE to the PDU session establishment request, and sends the PDU session establishment request to the SMF.
5. The SMF initiates an identity request to the UE by using the AMF
   In a possible embodiment, before the SMF initiates the identity request to the UE by using the AMF, the SMF may first determine whether secondary authentication in the embodiments of the present invention needs to be performed, based on a locally prestored policy, a related policy that is carried in the PDU session establishment request of the UE, a related policy that is read from subscription data of the UE in the UDM, or a related policy that is read from another network element (for example, an AF).
   In a specific implementation, the identity request may be an EAP protocol identity request (EAP identity request).
6. The UE feeds back an identity response to the SMF by using the AMF, where the identity response carries a secondary ID of the UE.
   In a specific implementation, the UE generates the identity response based on the identity request, and the identity response may be an EAP protocol identity response (EAP identity response).
7. The SMF sends the SUPI (or the external ID) and/or the PEI, and the identity response to the AAA server.
   In a possible embodiment, if the binding information obtained by the AAA server in step 1 does not include a binding relationship between a secondary ID and an external ID, the SMF sends the SUPI and/or the PEI, and the identity response to the AAA server.
   In a possible embodiment, if the primary ID obtained by the SMF in step 4 includes the SUPI, and the binding information obtained by the AAA server in step 1 includes a binding relationship between a secondary ID and an external ID, the SMF needs to convert the SUPI of the UE into the external ID of the UE. Specifically, the SMF requests the subscription data of the UE from the UDM based on the SUPI. The UDM sends the subscription data of the UE to the SMF. The subscription data includes the external ID of the UE. The external ID may be obtained by translating the SUPI by using an NEF, and is stored in the subscription information in the UDM. In this way, the SMF replaces the SUPI of the UE with the external ID of the UE in the obtained primary ID. Then, the SMF sends the external ID and/or the PEI, and the identity response to the AAA server.
   In a specific embodiment, the SMF may forward the identity response of the UE to the AAA server, and also send the SUPI (or the external ID) and/or the PEI of the UE together to the AAA server. The identity response includes the secondary ID of the UE.
   In a specific implementation, the SMF may add the SUPI (or the external ID) and/or the PEI of the UE, and the identity response of the UE to an authentication authorization request (Authentication Authorization Request, AAR) or a diameter EAP request (Diameter EAP Request, DER) of the diameter protocol.
8. The AAA server verifies, based on the binding information, whether the primary ID of the UE and the secondary ID of the UE satisfy a binding relationship, to obtain an authentication result. After receiving the primary ID (the SUPI (or the external ID) and/or the PEI) of the UE and the secondary ID of the UE, the AAA server queries the binding information, and verifies whether the primary ID of the UE and the secondary ID of the UE satisfy the binding relationship. If the primary ID of the UE and the secondary ID of the UE satisfy the binding relationship, it indicates that the secondary authentication succeeds. If the primary ID of the UE and the secondary ID of the UE do not satisfy the binding relationship, it indicates that the secondary authentication fails. In a specific implementation, the AAA server may query, in a plurality of locally prestored binding relationships, whether a combination of the primary ID and the secondary ID exists. The AAA server may alternatively query, in another network element (for example, a database server) storing binding relationships, whether a combination of the primary ID and the secondary ID exists. If the combination exists, the AAA server extracts a binding relationship corresponding to the primary ID from the another network element, and verifies whether the primary ID of the UE and the secondary ID of the UE satisfy the binding relationship.
   In a specific implementation, the AAA server may perform corresponding subsequent processing based on different application scenarios to obtain authentication results, refer to the descriptions of the embodiments in FIG. 4a, FIG. 4b, and FIG. 4c.
9. The AAA server sends the authentication result to the SMF, and the SMF sends the authentication result to the UE.

In a specific implementation, the AAA server may add the authentication result to an authentication authorization answer (Authentication Authorization Answer, AAA) or a diameter EAP answer (Diameter EAP Answer, DEA) of the diameter protocol.

It should be noted that for the embodiment described in FIG. 8, in a possible implementation, the secondary ID of the UE may be carried in the PDU session establishment request sent by the UE in step 3. In this case, step 5 and step 6 may be replaced with the following step: The SMF generates an identity response (such as an EAP identity response) for the response.

It should be further noted that for the embodiment described in FIG. 8, in a possible implementation, step 1 may be implemented after step 7 and before step 8. In other words, after the AAA server obtains the SUPI (or the external ID) and/or the PEI, and the identity response that are sent by the SMF, the AAA server obtains UE-related binding information as required. Through implementation of this embodiment of the present invention, the AAA server pre-obtains the binding relationship between the secondary ID and the primary ID. When the primary authentication on the UE succeeds, and the secondary authentication needs to be performed on the UE, the AAA server can determine whether the secondary ID of the UE is valid by verifying whether the secondary ID provided by the UE is bound to the authenticated primary ID, to obtain the authentication result of the secondary authentication. It can be learned that, in the secondary authentication process in this embodiment of the present invention, only one message that carries the primary ID and the secondary ID in step 7 is required, so that communication overheads are low; and calculation overheads spent by the AAA server are merely for determining whether the primary ID and the secondary ID of the UE have the binding relationship, so that calculation overheads are low. Therefore, the implementation of this embodiment of the present invention can obviously reduce communication load, reduce resource consumption, and improve authentication efficiency.

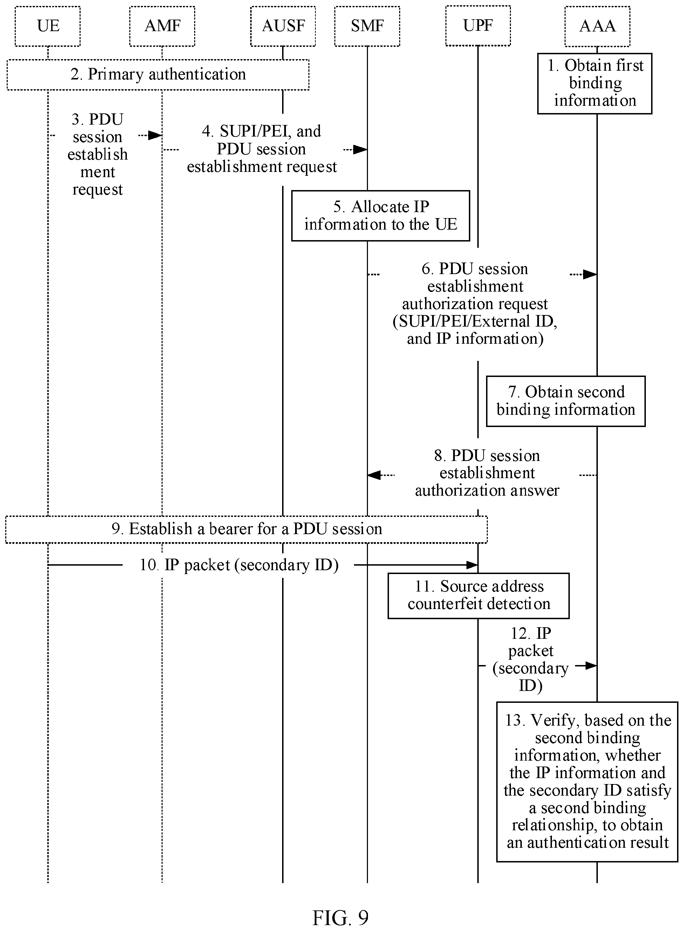

Referring to FIG. 9, an embodiment of the present invention provides another network authentication method, including but not limited to the following steps.
1. An AAA server obtains first binding information.
   The binding information herein is referred to as the first binding information, to distinguish from second binding information below.
   In a specific embodiment, the AAA server may prestore the first binding information. In another specific embodiment, the AAA server may pre-obtain the first binding information from another network element (for example, a UDM) that stores the first binding information. For the first binding information, refer to the descriptions of the embodiments in FIG. 5 to FIG. 7.
2. Perform primary authentication between UE and an AUSF, and an AMF obtains a primary ID (for example, an SUPI and/or a PEI) of the UE.
   When the authentication is started, the AMF obtains the primary ID of the UE. If the authentication succeeds, the AMF determines that the primary ID of the UE is authentic and valid.
   Specifically, the primary authentication between the UE and the AUSF is performed based on the SUPI of the UE or the PEI of the UE. After the authentication succeeds, the AMF determines the SUPI and/or the PEI of the UE.
3. The UE initiates a PDU session establishment request to the AMF; and correspondingly, the AMF receives the PDU session establishment request.
   In a specific embodiment, the PDU session establishment request carries indication information of a PDU type. The PDU type may be internet protocol version 4 (Internet Protocol version 4, IPv4), or may be internet protocol version 6 (Internet Protocol version 6, IPv6).
4. The AMF sends the SUPI and/or the PEI, and the PDU session establishment request to an SMF Refer to the descriptions related to step 4 in the embodiment of FIG. 8.
5. The SMF determines IP information for the UE.
   In a possible embodiment, before the SMF determines the IP information for the UE, the SMF may first determine whether secondary authentication in the embodiments of the present invention needs to be performed, based on a locally prestored policy, a related policy that is carried in the PDU session establishment request of the UE, a related policy that is read from subscription data of the UE in the UDM, or a related policy that is read from another network element (for example, an AF).
   In a specific embodiment, the SMF has an IP address pool, and the SMF allocates the IP information to the UE based on the IP address pool and indication information of an IP packet type. In another specific embodiment, another network element has an IP address pool, and the SMF sends indication information of an IP packet type to the network element, to obtain IP information allocated by the network element. The SMF further allocates the IP information to the UE.
   The IP information is an IP address or an IP prefix. Specifically, if the IP packet type is IPv4, the IP address is allocated to the UE. If the IP packet type is IPv6, the IP prefix is allocated to the UE. In other words, before the secondary authentication is performed, the SMF pre-determines the IP address or the IP prefix for the UE.
6. The SMF sends a PDU session establishment authorization request, the SUPI (or the external ID) and/or the PEI of the UE, and the IP information of the UE to the AAA server.
   In a possible embodiment, if the binding information obtained by the AAA server in step 1 does not include a binding relationship between a secondary ID and an external ID, the SMF sends the SUPI and/or the PEI, the PDU session establishment authorization request, and the IP information of the UE to the AAA server.
   In a possible embodiment, if the primary ID obtained by the SMF in step 4 includes the SUPI, and the binding information obtained by the AAA server in step 1 includes a binding relationship between a secondary ID and an external ID, the SMF needs to convert the SUPI of the UE into the external ID of the UE. Specifically, the SMF requests the subscription data of the UE from the UDM based on the SUPI. The UDM sends the subscription data of the UE to the SMF. The subscription data includes the external ID of the UE. In this way, the SMF replaces the SUPI of the UE with the external ID of the UE in the obtained primary ID. Then, the SMF sends the external ID and/or the PEI, the PDU session establishment authorization request, and the IP information of the UE to the AAA server.
   In a specific embodiment, the SMF may add the SUPI (or the external ID) and/or the PEI of the UE, and the IP information of the UE to the PDU session establishment authorization request, and send the PDU session establishment authorization request to the AAA server.
7. The AAA server obtains second binding information based on the first binding information, the SUPI (or the external ID) and/or the PEI, and the IP information.
   In a specific embodiment, the AAA server queries, based on the first binding information, whether the received primary ID of the UE has a corresponding binding relationship. If the binding relationship corresponding to the primary ID of the UE can be found, a corresponding secondary ID in the binding relationship is extracted, and the second binding information is generated based on the secondary ID and the IP information. The second binding information includes a binding relationship between the secondary ID and the IP information.
8. The AAA server feeds back a PDU session establishment authorization answer to the SMF
   In a specific embodiment, in step 7, when the AAA server finds, based on the first binding information, the binding relationship corresponding to the primary ID of the UE, the AAA server feeds back the PDU session establishment authorization answer to the SMF. The PDU session establishment authorization answer indicates that session establishment authorization succeeds.
9. The SMF triggers establishment of a bearer for a PDU session.
   In a specific embodiment, because the PDU session establishment authorization answer indicates that the session establishment authorization succeeds, the SMF triggers the establishment of the bearer for the PDU session. In this process, the SMF separately sends, to the UE and a UPF, the IP address or the IP prefix that is determined in step 6. Correspondingly, the UE and the UPF obtain the IP address or the IP prefix that is allocated by the SMF to the UE.
10. The UE sends an IP packet to the AAA server, where the IP packet carries the secondary ID and a source address of the IP packet.
   In a specific implementation, the IP packet sent by the UE may be a session initiation protocol (Session Initiation Protocol, SIP) registration (REGISTER) message.
   In a specific implementation, a format of the secondary ID may be a session initiation protocol uniform resource identifier SIP URI.
11. The UPF performs source address counterfeit detection on the IP packet.
   The UPF may be configured to forward the IP packet. In a forwarding process, the UPF performs source address counterfeit detection on the IP packet based on the IP information of the UE that is obtained from the SMF, to ensure that the source address of the IP packet sent by the UE matches the IP address or the IP prefix that is determined by the SMF for the UE.
12. The UPF sends the IP packet to the AAA server.
13. The AAA server verifies, based on the second binding information, whether the source address of the IP packet and the secondary ID of the UE satisfy a second binding relationship, to obtain an authentication result.

The AAA server queries the second binding information based on the source address of the IP packet and the secondary ID of the UE, and verifies whether the primary ID of the UE and the secondary ID of the UE satisfy the binding relationship. If the primary ID of the UE and the secondary ID of the UE satisfy the binding relationship, it indicates that the secondary authentication succeeds. If the primary ID of the UE and the secondary ID of the UE do not satisfy the binding relationship, it indicates that the secondary authentication fails. For example, the AAA server queries the second binding information based on the secondary ID of the UE that is in the IP packet. If a second binding relationship corresponding to the secondary ID of the UE can be found, and IP information in the second binding relationship is the same as the source address of the IP packet, the secondary authentication succeeds. Otherwise, the secondary authentication fails. In a specific implementation, the AAA server may perform corresponding subsequent processing based on different application scenarios to obtain authentication results. Refer to the descriptions of the embodiments in FIG. 4a, FIG. 4b, and FIG. 4c.

Through implementation of this embodiment of the present invention, the AAA server pre-obtains the first binding relationship between the secondary ID and the primary ID, and generates the second binding relationship subsequently based on the first binding relationship. When the primary authentication on the UE succeeds, and the secondary authentication needs to be performed on the UE, the UE directly sends, to the AAA server, the IP packet that carries the secondary ID, and the AAA server verifies, based on the second binding relationship whether the secondary ID of the UE is bound to the source address of the IP packet, to determine whether the secondary ID of the UE is valid, so that the authentication result of the secondary authentication is obtained. It can be learned that, in the secondary authentication process in this embodiment of the present invention, only one message that carries the primary ID of the UE and the IP information of the UE in step 6 is required, so that communication overheads are low; and calculation overheads spent by the AAA server are merely for determining whether the secondary ID of the UE and the source address of the IP packet have the binding relationship, so that the calculation overheads are low Therefore, the implementation of this embodiment of the present invention can obviously reduce communication load, reduce resource consumption, and improve authentication efficiency. In addition, this embodiment of the present invention may be applied to services such as VoLTE and an IMS. According to this embodiment of the present invention, in a process of service communication between the UE and the AAA server, any subsequent packet of the UE may be prevented from counterfeiting a secondary ID of another UE, thereby improving communication security.

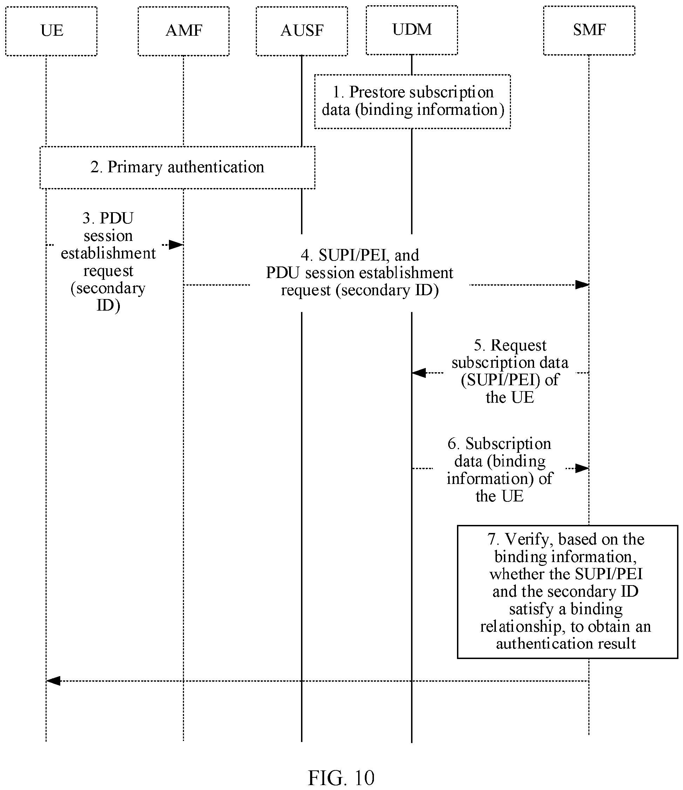

Referring to FIG. 10, an embodiment of the present invention provides another network authentication method, including but not limited to the following steps.
1. A UDM prestores subscription data of UE, where the subscription data includes binding information.
   A primary ID in the subscription data of the UDM is usually relatively fixed, and corresponding binding information may be prestored in the subscription data. The binding information includes binding relationships between one or more primary IDs and a list of secondary IDs. Specifically, for the binding information, refer to the descriptions of the embodiment of FIG. 7, and the primary ID may be an SUPI and/or a PEI.
2. Perform primary authentication between the UE and an AUSF, and an AMF obtains a primary ID of the UE.
   When the authentication is started, the AMF obtains the primary ID of the UE. If the authentication succeeds, the AMF determines that the primary ID of the UE is authentic and valid.
   Specifically, the primary authentication between the UE and the AUSF is performed based on the SUPI of the UE and/or the PEI of the UE. After the authentication succeeds, the AMF determines that the SUPI and/or the PEI of the UE are/is authentic and valid.
3. The UE initiates a PDU session establishment request to the AMF, where the PDU session establishment request carries a secondary ID of the UE; and correspondingly, the AMF receives the PDU session establishment request that carries the secondary ID of the UE.
4. The AMF sends the primary ID of the UE and the PDU session establishment request to an SMF. In a specific embodiment, the AMF separately sends the SUPI and/or the PEI of the UE and the PDU session establishment request to the SMF.
   In another specific embodiment, the AMF adds the SUPI and/or the PEI of the UE to the PDU session establishment request, and sends the request to the SMF.
5. The SMF sends a request to the UDM, to request the subscription data of the UE, where the request carries the SUPI and/or the PEI.
6. The UDM feeds back the subscription data of the UE to the SMF, where the subscription data includes the binding information.
   In a specific implementation, the UDM may further extract, from the binding information including the subscription data, a binding relationship (a binding relationship between the primary IDs and the lists of secondary IDs) corresponding to the UE, and send the binding relationship to the SMF.
7. The SMF verifies, based on the binding information, whether the primary ID of the UE and the secondary ID of the UE satisfy the binding relationship, to obtain an authentication result.
   In a possible embodiment, before step 7, the SMF may first determine whether secondary authentication in the embodiments of the present invention needs to be performed, based on a locally prestored policy, a related policy that is carried in the PDU session establishment request of the UE, or a related policy that is read from the subscription data of the UE in the UDM.
   The SMF verifies, based on the binding information, whether the primary ID of the UE and the secondary ID of the UE satisfy the binding relationship. If the primary ID of the UE and the secondary ID of the UE satisfy the binding relationship, it indicates that the secondary authentication succeeds. If the primary ID of the UE and the secondary ID of the UE do not satisfy the binding relationship, it indicates that the secondary authentication fails. In a specific embodiment, the verifying, by the SMF based on the binding information, whether the primary ID of the UE and the secondary ID of the UE satisfy the binding relationship, to obtain an authentication result may be as follows: The SMF determines whether the secondary ID of the UE is in the list of secondary IDs satisfying the binding relationship. If the secondary ID of the UE is in the list of secondary IDs satisfying the binding relationship, it indicates that the secondary authentication succeeds. If the secondary ID of the UE is not in the list of secondary IDs satisfying the binding relationship, it indicates that the secondary authentication fails.
8. The SMF sends the authentication result to the UE.

It should be noted that, for the embodiment of FIG. 10, in a possible implementation, the binding information may alternatively be prestored in a local storage of the SMF. In other words, step 1 may be canceled, and step 5 and step 6 may be replaced with a step that the SMF queries whether a combination of the primary ID of the UE and the secondary ID of the UE exists in the prestored binding information; or the SMF reads the binding information from the local storage, and extracts the binding relationship corresponding to the UE from the binding information.

Through implementation of this embodiment of the present invention, the UDM prestores the binding relationship between the secondary ID and the primary ID, and the SMF is used as a network element for the secondary authentication. When the primary authentication on the UE succeeds, and the secondary authentication needs to be performed on the UE, the SMF can determine whether the secondary ID of the UE is valid by obtaining the related binding relationship by using the subscription data of the UDM and by verifying whether the secondary ID provided by the UE is bound to the authenticated primary ID, to obtain the authentication result of the secondary authentication. It can be learned that, in the secondary authentication process in this embodiment of the present invention, only one message that carries the primary ID and the secondary ID in step 4 is required, so that communication overheads are low; and calculation overheads spent by the SMF are merely for determining whether the primary ID and the secondary ID of the UE have the binding relationship, so that calculation overheads are low. Therefore, the implementation of this embodiment of the present invention can obviously reduce communication load, reduce resource consumption, and improve authentication efficiency.

The foregoing describes the method in the embodiments of the present invention, and the following describes related apparatuses in the embodiments of the present invention.

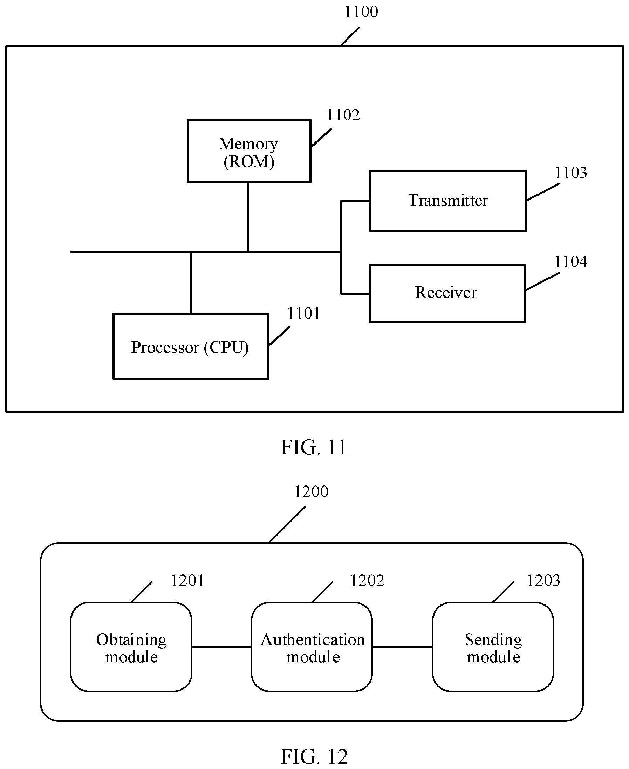

Referring to FIG. 11, an embodiment of the present invention provides an authentication network element 1100. The authentication network element includes a processor 1101, a memory 1102, a transmitter 1103, and a receiver 1104. The processor 1101, the memory 1102, the transmitter 1103, and the receiver 1104 are connected to each other (for example, connected to each other by using a bus).

The memory 1102 includes but is not limited to a random access memory (Random Access Memory, RAM), a read-only memory (Read-Only Memory, ROM), an erasable programmable read-only memory (Erasable Programmable Read-Only Memory, EPROM), or a compact disc read-only memory (Compact Disc Read-Only Memory, CD-ROM). The memory 1102 is configured to store a related instruction and related data.

The transmitter 1103 is configured to transmit data, and the receiver 1104 is configured to receive data.

The processor 1101 may be one or more central processing units (Central Processing Unit, CPU). When the processor 1101 is one CPU, the CPU may be a single-core CPU or a multi-core CPU. The processor 1101 is configured to read program code stored in the memory 1102, to implement a function of the authentication network element in the embodiment of FIG. 3.

When the authentication network element 1100 is an AAA server, the program code stored in the memory 1102 is specifically used to implement a function of the AAA server in the embodiment of FIG. 8 or FIG. 9. Specifically, the processor 1101 is configured to invoke the program code stored in the memory 1102, to perform the following steps:
obtaining, by the AAA server, first binding information, where the first binding information includes first binding relationships of one or more pairs of first authentication identifiers and second authentication identifiers, the first authentication identifier indicates an identifier used by the UE for network authentication with an authentication server function network element AUSF, and the second authentication identifier indicates an identifier used by the UE when the UE requests network authentication on access to a data network DN;
receiving, by the AAA server, a first authentication identifier sent by an AMF, where the first authentication identifier of the UE is an identifier that has been authenticated through network authentication between the UE and the AUSF;
receiving, by the AAA server, a second authentication identifier of the UE that is sent by the UE; and
verifying, by the AAA server based on the first binding information, whether the first authentication identifier of the UE and the second authentication identifier of the UE satisfy the first binding relationship, to obtain an authentication result.

Alternatively, in a possible implementation, the authentication network element is an authentication, authorization, accounting AAA server, where
the receiver is configured to receive a second authentication identifier of the UE that is sent by an SMF;
the processor is configured to attempt to authenticate the second authentication identifier of the UE according to the extensible identity authentication protocol EAP, to obtain a first authentication result;
the receiver is further configured to receive a first authentication identifier of the UE that is sent by the SMF; and
the processor is further configured to verify, based on the first binding information, whether the first authentication identifier of the UE and the second authentication identifier of the UE satisfy the first binding relationship, to obtain a second authentication result.

It should be noted that when the authentication network element 1100 is the AAA server, for steps performed by the processor 1101 and other technical features related to the processor 1101, further refer to related content of the AAA server in the embodiment of FIG. 8, FIG. 9, or FIG. 17A and FIG. 17B described above. Details are not described herein again.

When the authentication network element 1100 is an SMF, the program code stored in the memory 1102 is specifically used to implement a function of the SMF in the embodiment of FIG. 10. Specifically, the processor 1101 is configured to invoke the program code stored in the memory 1102, to perform the following steps:
receiving, by the SMF, a first authentication identifier sent by an access and mobility management function network element AMF, where the first authentication identifier of the UE is an identifier that has been authenticated through network authentication between the UE and an AUSF;
receiving, by the SMF, a second authentication identifier of the UE that is sent by the UE; and
obtaining, by the SMF, first binding information; and verifying, based on the first binding information, whether the first authentication identifier of the UE and the second authentication identifier of the UE satisfy the first binding relationship, to obtain an authentication result.

The first binding information includes first binding relationships of one or more pairs of first authentication identifiers and second authentication identifiers; the first authentication identifier indicates an identifier used by the UE for network authentication with the authentication server function network element AUSF, and the second authentication identifier indicates an identifier used by the UE when the UE requests network authentication on access to a data network DN.

It should be noted that when the authentication network element 1100 is the SMF, for steps performed by the processor 1101 and other technical features related to the processor 1101, further refer to related content of the SMF in the embodiment of FIG. 10. Details are not described herein again.

Based on a same inventive concept, an embodiment of the present invention further provides an AAA server 1200. As shown in FIG. 12, the AAA server 1200 may include an obtaining module 1201, an authentication module 1202, and a sending module 1203.

The obtaining module 1201 is configured to obtain first binding information, where the first binding information includes first binding relationships of one or more pairs of first authentication identifiers and second authentication identifiers, the first authentication identifier indicates an identifier used by the UE for network authentication with an authentication server function network element AUSF, and the second authentication identifier indicates an identifier used by the UE when the UE requests network authentication on access to a data network DN;
the obtaining module is further configured to receive a first authentication identifier sent by the AMF, where the first authentication identifier of the UE is an identifier that has been authenticated through network authentication between the UE and the AUSF; and
the obtaining module is further configured to receive a second authentication identifier of the UE that is sent by the UE.

The authentication module 1202 is configured to verify, based on the first binding information, whether the first authentication identifier of the UE and the second authentication identifier of the UE satisfy the first binding relationship, to obtain an authentication result.

Optionally, the AAA server 1200 further includes a sending module 1203, configured to feed back the authentication result to the UE.

Optionally, the obtaining module 1201 is configured to obtain the first binding information from a local storage.

Optionally, if the authentication succeeds, the authentication result is that network authentication between the UE and the DN succeeds, and the authentication module 1202 adds a binding relationship between the first authentication identifier of the UE and the second authentication identifier of the UE to the locally stored first binding information.

Optionally, the first authentication identifier in the first binding information includes: a subscriber permanent identifier SUPI and/or a permanent equipment identification PEI.

Optionally, the first authentication identifier in the first binding information includes: an external identifier, or an external identifier and a permanent equipment identification PEI; and the external identifier is obtained by translating a subscriber permanent identifier SUPI.

Optionally, that the obtaining module 1201 is configured to receive a first authentication identifier sent by the AMF includes: the obtaining module 1201 is configured to receive the first authentication identifier of the UE that is sent by the AMF by using a session management function network element SMF.

Optionally, that the obtaining module 1201 is configured to receive a second authentication identifier of the UE that is sent by the UE includes:
the obtaining module 1201 is configured to receive an EAP identity response message sent by the UE, where the EAP identity response message includes the second authentication identifier of the UE.

Optionally, that the obtaining module 1201 is configured to receive a second authentication identifier of the UE that is sent by the UE includes:
receiving, by the AAA server, an EAP identity response message sent by the SMF, where the EAP identity response message includes the second authentication identifier of the UE, and the second authentication identifier of the UE is sent by the UE to the SMF by using a session establishment request.

Optionally, before verifying, based on the first binding information, whether the first authentication identifier of the UE and the second authentication identifier of the UE satisfy the first binding relationship, the obtaining module 1201 is further configured to: receive IP information sent by the SMF, where the IP information is an IP address or an IP prefix that is generated by the SMF based on the first authentication identifier of the UE; and obtain second binding information based on the first binding information, where the second binding information includes a second binding relationship between the IP information and the second authentication identifier.

Specifically, that the AAA server receives the second authentication identifier of the UE that is sent by the UE is specifically: the obtaining module 1201 is configured to receive an IP packet sent by the UE, where the IP packet includes the second authentication identifier of the UE and the IP information of the UE.

Specifically, that the authentication module 1202 is configured to verify, based on the first binding information, whether the first authentication identifier of the UE and the second authentication identifier of the UE satisfy the first binding relationship is specifically: verifying, by the authentication module 1202, based on the second binding information, whether the IP address of the UE and the second authentication identifier of the UE satisfy the second binding relationship. In a possible implementation, the authentication network element is an authentication, authorization, accounting AAA server.

The obtaining module 1201 is configured to receive the second authentication identifier of the UE that is sent by an SMF.

The authentication the module 1202 is configured to attempt to authenticate the second authentication identifier of the UE according to the extensible identity authentication protocol EAP, to obtain a first authentication result.

The obtaining module 1201 is further configured to receive the first authentication identifier of the UE that is sent by the SMF.

The authentication module 1202 is further configured to verify, based on the first binding information, whether the first authentication identifier of the UE and the second authentication identifier of the UE satisfy the first binding relationship, to obtain a second authentication result. It should be noted that based on the detailed descriptions above of the AAA server in the embodiment of FIG. 8, FIG. 9, or FIG. 17A and FIG. 17B, a person skilled in the art may clearly learn of an implementation method of each function module included in the AAA server 1200. Therefore, for brevity of this specification, details are not described herein again.

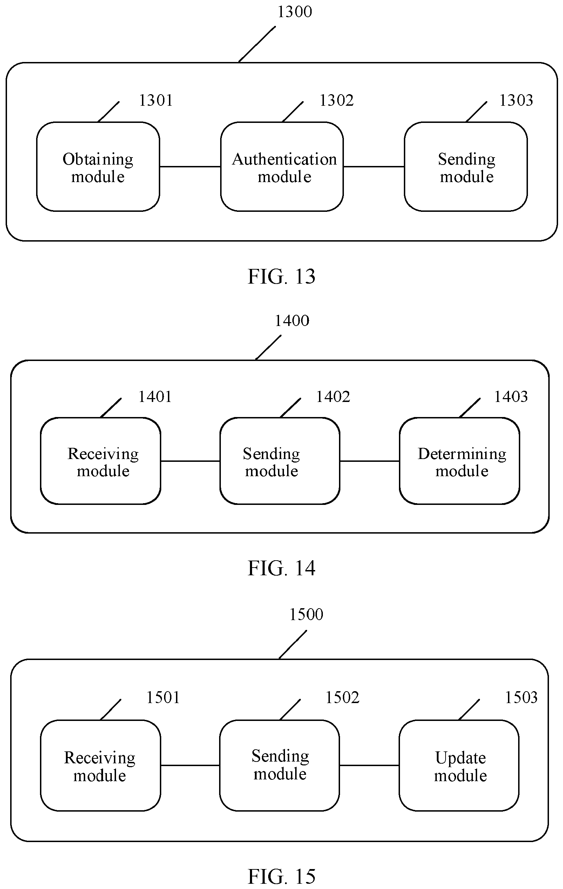

Based on a same inventive concept, an embodiment of the present invention further provides an SMF apparatus 1300. As shown in FIG. 13, the SMF apparatus 1300 may include an obtaining module 1301, an authentication module 1302, and a sending module 1303.

The obtaining module 1301 is configured to receive a first authentication identifier sent by an access and mobility management function network element AMF;
the obtaining module is further configured to receive a second authentication identifier of the UE that is sent by the UE; and
the obtaining module is further configured to obtain first binding information.

The authentication module 1302 is configured to verify, based on the first binding information, whether the first authentication identifier of the UE and the second authentication identifier of the UE satisfy the first binding relationship, to obtain an authentication result.

The sending module 1303 is configured to feed back the authentication result to the UE. Optionally, the obtaining module 1301 is configured to obtain the binding information from a local storage.

Optionally, if the authentication succeeds, the authentication result is that network authentication between the UE and the DN succeeds, and the authentication module 1302 adds a binding relationship between the first authentication identifier of the UE and the second authentication identifier of the UE to the locally stored first binding information.

Optionally, that the obtaining module 1301 is configured to obtain binding information includes: the obtaining module 1301 is used by the SMF to receive the binding information sent by a unified data management network element UDM.

Optionally, if the authentication succeeds, the authentication result is that network authentication between the UE and the DN succeeds, and the sending module 1303 is configured to instruct the UDM to update the binding relationship stored in the UDM.

Optionally, that the obtaining module 1301 is configured to receive a second authentication identifier of the UE that is sent by the UE includes:
the obtaining module 1301 is configured to receive a session establishment request sent by the UE, where the session establishment request includes the second authentication identifier of the UE.

The first authentication identifier includes: a subscriber permanent identifier SUPI and/or a permanent equipment identification PEI.

Optionally, in the binding information, each first authentication identifier corresponds to at least one second authentication identifier; and that the obtaining module 1302 is configured to verify, based on the binding information, whether the first authentication identifier of the UE and the second authentication identifier of the UE have the binding relationship includes: the obtaining module 1301 is configured to search for the binding information based on the first authentication identifier of the UE, to obtain the at least one second authentication identifier corresponding to the first authentication identifier of the UE; and the authentication module 1302 is configured to verify whether the second authentication identifier of the UE is in the at least one corresponding second authentication identifier.

It should be noted that based on the detailed descriptions above of the SMF in the embodiment of FIG. 10, a person skilled in the art may clearly learn of an implementation method of each function module included in the SMF apparatus 1300. Therefore, for brevity of this specification, details are not described herein again.

Based on a same inventive concept, an embodiment of the present invention further provides another SMF apparatus 1400. As shown in FIG. 14, the SMF apparatus 1400 may include:
a receiving module 1401, configured to receive a first authentication identifier of UE that is sent by an AMF, where the first authentication identifier of the UE is an identifier that has been authenticated through network authentication between the UE and an authentication server function network element AUSF, where
the receiving module 1401 is further configured to receive a second authentication identifier of the UE that is sent by the UE; and
a sending module 1402, configured to send the first authentication identifier of the UE and the second authentication identifier of the UE to an authentication, authorization, accounting AAA server, so that the AAA server verifies, based on the first binding information, whether the first authentication identifier of the UE and the second authentication identifier of the UE satisfy a first binding relationship, where
the receiving module 1401 is further configured to receive an authentication result sent by the AAA server, where
the first binding information includes first binding relationships of one or more pairs of first authentication identifiers and second authentication identifiers; the first authentication identifier indicates an identifier used by the UE for network authentication with the AUSF, and the second authentication identifier indicates an identifier used by the UE when the UE requests network authentication on access to a data network DN.

Optionally, that the receiving module 1401 is configured to receive a second authentication identifier of the UE that is sent by the UE includes:
the receiving module 1401 is configured to receive a session establishment request sent by the UE, where the session establishment request includes the second authentication identifier of the UE.

Optionally, that the sending module 1402 is configured to send the first authentication identifier of the UE and the second authentication identifier of the UE to an AAA server includes: the sending module 1402 is configured to send a request message to the AAA server, where the request message is used to request the AAA server to attempt to authenticate an identity of the UE, and the request message includes the first authentication identifier of the UE and the second authentication identifier of the UE.

Optionally, the first authentication identifier includes: a subscriber permanent identifier SUPI and/or a permanent equipment identification PEI.

Optionally, the first authentication identifier includes: an external identifier, or an external identifier and a permanent equipment identification PEI; the external identifier is obtained by translating a subscriber permanent identifier SUPI; the external identifier is carried in subscription data of a UDM; and the receiving module 1401 is configured to obtain the subscription data from the UDM.

Optionally, before sending the first authentication identifier of the UE and the second authentication identifier of the UE to the AAA server, the receiving module 1401 is further configured to obtain an authentication policy, where the authentication policy is used to instruct the SMF whether to send the first authentication identifier of the UE and the second authentication identifier of the UE to the AAA server.

Specifically, that the sending module 1402 is configured to send the first authentication identifier of the UE and the second authentication identifier of the UE to an AAA server is specifically: when the authentication policy instructs the SMF to send the first authentication identifier of the UE and the second authentication identifier of the UE to the AAA server, the sending module 1402 is configured to send the first authentication identifier of the UE and the second authentication identifier of the UE to the AAA server.

The authentication policy is stored in a local storage of the SMF; or the authentication policy is carried in the session establishment request sent by the UE; or the authentication policy is carried in the subscription data sent by the UDM.

Optionally, the SMF apparatus 1400 may further include a determining module 1403. The determining module 1403 is configured to determine IP information for the first authentication identifier of the UE. The IP information is an IP address or an IP prefix. The sending module 1402 is configured to send the IP information to the UE. The sending module 1402 is further configured to send the IP information to the AAA server.

It should be noted that based on the detailed descriptions above of the SMF in the embodiment of FIG. 8 or FIG. 9, a person skilled in the art may clearly learn of an implementation method of each function module included in the SMF apparatus 1400. Therefore, for brevity of this specification, details are not described herein again.

Based on a same inventive concept, an embodiment of the present invention further provides another UDM apparatus 1500. As shown in FIG. 15, the UDM apparatus 1400 may include:
a receiving module 1501, configured to receive a request of an authentication network element; and
a sending module 1502, configured to send first binding information to the authentication network element based on the request, where the first binding information includes first binding relationships of one or more pairs of first authentication identifiers and second authentication identifiers, the first authentication identifier indicates an identifier used by user equipment UE for network authentication with an authentication server function network element AUSF, and the second authentication identifier indicates an identifier used by the UE when the UE requests network authentication on access to a data network DN.

In this embodiment of the present invention, that the sending module 1502 is configured to send binding information to the authentication network element based on the request includes:
sending, by the sending module 1502, subscription data to the authentication network element based on the request, where the subscription data includes the binding information.

In this embodiment of the present invention, the receiving module 1501 receives a binding information update request sent by the authentication network element, where the binding information update request includes a second binding relationship between a first authentication identifier of the UE and a second authentication identifier of the UE. The UDM further includes an update module 1503, and the update module 1503 is configured to update the first binding information based on the binding information update request.

In this embodiment of the present invention, that the update module 1503 updates the first binding information based on the binding information update request includes: adding, by the update module 1503, the second binding relationship to the first binding information, to obtain second binding information.

The first authentication identifier includes: a subscriber permanent identifier SUPI and/or a permanent equipment identification PEI.

The authentication network element includes: an authentication, authorization, accounting AAA server or a session management function network element SMF

It should be noted that based on the detailed descriptions above detailed of the UDM in the embodiment of FIG. 8, FIG. 9, or FIG. 10, a person skilled in the art may clearly learn of an implementation method of each function module included in the UDM apparatus 1500. Therefore, for brevity of this specification, details are not described herein again.

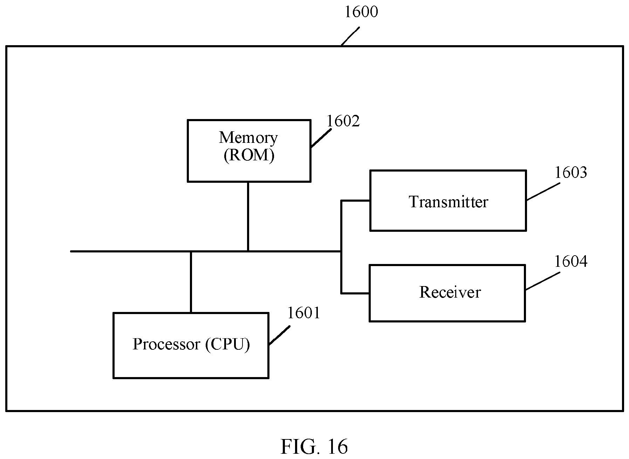

Referring to FIG. 16, an embodiment of the present invention provides a UDM apparatus 1600. The UDM apparatus 1600 includes a processor 1601, a memory 1602, a transmitter 1603, and a receiver 1604. The processor 1601, the memory 1602, the transmitter 1603, and the receiver 1604 are connected to each other (for example, connected to each other by using a bus).

The memory 1602 is configured to store a related instruction and related data.

The transmitter 1603 is configured to transmit data, and the receiver 1604 is configured to receive data.

The processor 1601 may be one or more central processing units (Central Processing Unit, CPU). When the processor 1601 is one CPU, the CPU may be a single-core CPU or a multi-core CPU. The processor 1601 is configured to read program code stored in the memory 1602, to implement a function of the UDM in the foregoing embodiment of FIG. 8, FIG. 9, or FIG. 10.

The receiver 1604 is configured to receive a request of an authentication network element, and the UDM sends first binding information to the authentication network element based on the request, where the first binding information includes first binding relationships of one or more pairs of first authentication identifiers and second authentication identifiers, the first authentication identifier indicates an identifier used by user equipment UE for network authentication with an authentication server function network element AUSF, and the second authentication identifier indicates an identifier used by the UE when the UE requests network authentication on access to a data network DN.

That the transmitter 1603 is configured to send the binding information to the authentication network element based on the request includes:
the transmitter 1603 is configured to send subscription data to the authentication network element based on the request, where the subscription data includes the binding information.

In this embodiment of the present invention, the receiver 1604 is configured to receive a binding information update request sent by the authentication network element, where the binding information update request includes a second binding relationship between a first authentication identifier of the UE and a second authentication identifier of the UE; and the processor 1601 is configured to update the first binding information based on the binding information update request. In this embodiment of the present invention, that the processor 1601 is configured to update the first binding information based on the binding information update request includes: the processor 1601 is configured to add the second binding relationship to the first binding information, to obtain second binding information.

The first authentication identifier includes: a subscriber permanent identifier SUPI and/or a permanent equipment identification PEI.

The authentication network element includes: an authentication, authorization, accounting AAA server or a session management function network element SMF.

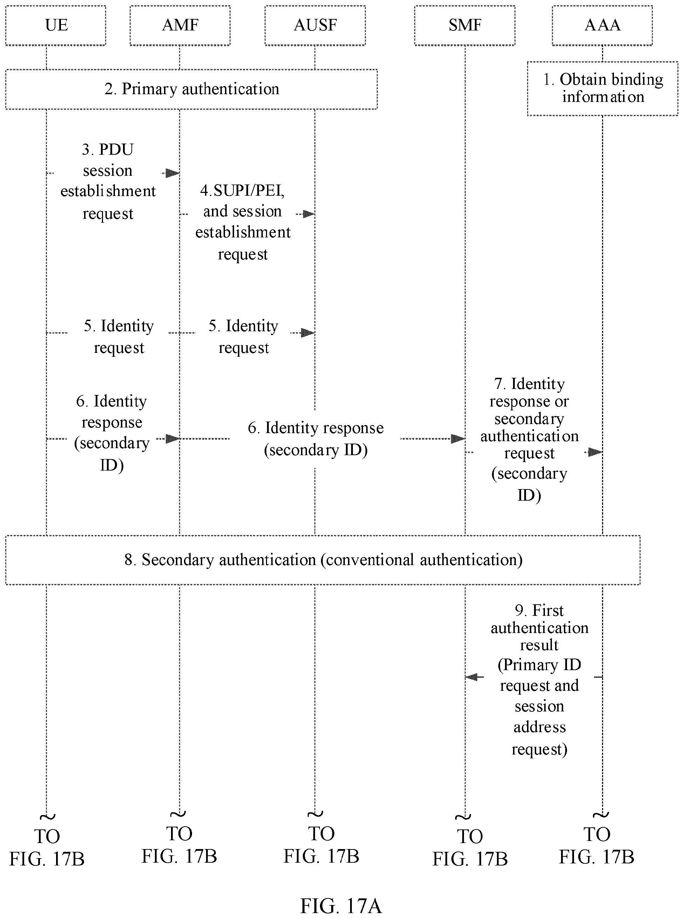

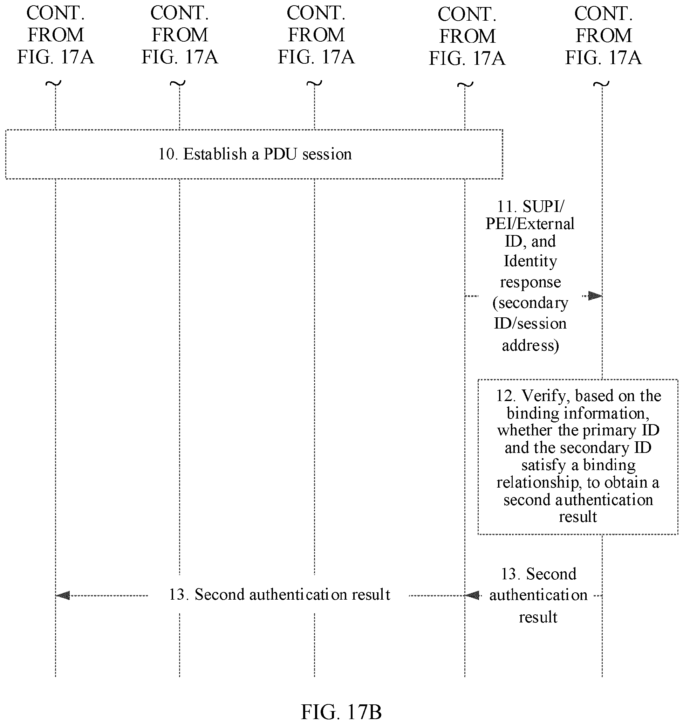

Referring to FIG. 17A and FIG. 17B, an embodiment of the present invention provides another network authentication method. In this method, secondary authentication and binding information verification are performed by stages. The secondary authentication is first performed based on an existing secondary authentication procedure (for example, the conventional authentication procedure shown in FIG. 2). After the conventional authentication succeeds, an AAA server starts the binding information verification. The method includes but is not limited to the following steps.
1. The AAA server obtains binding information.
   In a specific embodiment, the AAA server may prestore the binding information. In another specific embodiment, the AAA server may pre-obtain the binding information from another network element (for example, a UDM) that stores the binding information. For the binding information, refer to the descriptions of the embodiments in FIG. 5 to FIG. 7.
2. Perform primary authentication between UE and an AUSF, and an AMF obtains a primary ID of the UE.
   When the authentication is started, the AMF obtains the primary ID of the UE. If the authentication succeeds, the AMF determines that the primary ID of the UE is authentic and valid. Specifically, the primary authentication between the UE and the AUSF is performed based on an SUPI of the UE or a PEI of the UE. After the authentication succeeds, the AMF obtains the SUPI and/or the PEI of the UE.
3. The UE initiates a PDU session establishment request to the AMF; and correspondingly, the AMF receives the PDU session establishment request.
4. The AMF sends the SUPI and/or the PEI, and the PDU session establishment request to an SMF. In a specific embodiment, the AMF separately sends the PDU session establishment request of the UE and the authenticated SUPI or PEI of the UE to the SMF. In other words, after step 2, the AMF sends the SUPI or the PEI of the UE to the SMF. After step 3, the AMF forwards the PDU session establishment request of the UE to the SMF.
   In another specific embodiment, the AMF adds the authenticated SUPI or PEI of the UE to the PDU session establishment request, and sends the request to the SMF. In other words, after step 2, the AMF stores the SUPI or the PEI of the UE. After step 3, the AMF adds the SUPI or the PEI of the UE to the PDU session establishment request, and sends the PDU session establishment request to the SMF
5. The SMF initiates an identity request to the UE by using the AMF
   In a possible embodiment, before the SMF initiates the identity request to the UE by using the AMF, the SMF may first determine whether secondary authentication in the embodiments of the present invention needs to be performed, based on a locally prestored policy, a related policy that is carried in the PDU session establishment request of the UE, a related policy that is read from subscription data of the UE in the UDM, or a related policy that is read from another network element (for example, an AF).
   In a specific implementation, the identity request may be an EAP protocol identity request (EAP identity request).
6. The UE feeds back an identity response to the SMF by using the AMF, where the identity response carries a secondary ID of the UE.
   In a specific implementation, the UE generates the identity response based on the identity request, and the identity response may be an EAP protocol identity response (EAP identity response).
7. The SMF sends the identity response to the AAA server.
   In a possible embodiment, the identity response includes the secondary ID. In a specific implementation, the identity response may be a secondary authentication request, and the request includes authentication information required for the secondary authentication.
8. Perform secondary authentication between the AAA server and the UE.
   In this step, the secondary authentication is conventional authentication, to be specific, binding relationship verification is not performed in the secondary authentication. For a specific procedure, refer to the descriptions of FIG. 2. It should be noted that, in a specific implementation, another EAP method different from the method described in FIG. 2 may alternatively be used for the secondary authentication.
9. The AAA server sends a result of the secondary authentication (or referred to as a first authentication result) to the SMF
   In a possible embodiment, if the secondary authentication succeeds, the first authentication result is used to confirm that the secondary authentication succeeds before verifying the binding relationship.
   In a possible embodiment, if the secondary authentication succeeds, the first authentication result includes a request for an SUPI, and/or a PEI, and/or an external ID.
   In a possible embodiment, if the authentication succeeds, the result of the secondary authentication includes a session address request.
10. The SMF continues to perform a PDU session establishment process with the UE.
11. After the PDU session is successfully established, the SMF sends the SUPI (or the external ID) and/or the PEI, and the identity response to the AAA server.
   In a possible embodiment, if the binding information obtained by the AAA server in step 1 does not include a binding relationship between a secondary ID and an external ID, the SMF sends the SUPI and/or the PEI, and the identity response to the AAA server.
   In a possible embodiment, if the primary ID obtained by the SMF in step 4 includes the SUPI, and the binding information obtained by the AAA server in step 1 includes a binding relationship between a secondary ID and an external ID, the SMF needs to convert the SUPI of the UE into the external ID of the UE. Specifically, the SMF requests the subscription data of the UE from the UDM based on the SUPI. The UDM sends the subscription data of the UE to the SMF. The subscription data includes the external ID of the UE. The external ID may be obtained by translating the SUPI by using an NEF, and is stored in the subscription information in the UDM. In this way, the SMF replaces the SUPI of the UE with the external ID of the UE in the obtained primary ID. Then, the SMF sends the external ID and/or the PEI, and the identity response to the AAA server.
   In a specific embodiment, the SMF may forward the identity response of the UE to the AAA server, and also send the SUPI (or the external ID) and/or the PEI of the UE together to the AAA server. The identity response includes the secondary ID of the UE.
   In a specific implementation, the SMF may add the SUPI (or the external ID) and/or the PEI of the UE, and the identity response of the UE to an authentication authorization request (Authentication Authorization Request, AAR) or a diameter EAP request (Diameter EAP Request, DER) of the diameter protocol.
12. The AAA server verifies, based on the binding information, whether the primary ID of the UE and the secondary ID of the UE satisfy the binding relationship, to obtain a second authentication result.
   After receiving the primary ID (the SUPI (or the external ID) and/or the PEI) of the UE and the secondary ID of the UE, the AAA server queries the binding information, and verifies whether the primary ID of the UE and the secondary ID of the UE satisfy the binding relationship. If the primary ID of the UE and the secondary ID of the UE satisfy the binding relationship, the second authentication result indicates that final secondary authentication succeeds. If the primary ID of the UE and the secondary ID of the UE do not satisfy the binding relationship, the second authentication result indicates that final secondary authentication fails.
   In a specific implementation, the AAA server may query, in a plurality of locally prestored binding relationships, whether a combination of the primary ID and the secondary ID exists. The AAA server may alternatively query, in another network element (for example, a database server) storing binding relationships, whether a combination of the primary ID and the secondary ID exists. If the combination exists, the AAA server extracts a binding relationship corresponding to the primary ID from the another network element, and verifies whether the primary ID of the UE and the secondary ID of the UE satisfy the binding relationship.
13. Optionally, the AAA server sends the second authentication result to the SMF, and the SMF sends the second authentication result to the UE.

In a possible embodiment, if the second authentication result is that the primary ID and the secondary ID satisfy the binding relationship, the AAA server may not send the authentication result to the UE. Because in step 10, in the process in which the SMF establishes a PDU session with the UE, the UE has learned that the authentication succeeds, although the authentication is secondary authentication without binding authentication.

In a possible embodiment, if the second authentication result is that the primary ID and the secondary ID do not satisfy the binding relationship, the AAA server may send the result indicating that the authentication fails to the UE.

In another possible embodiment, if the second authentication result is that the primary ID and the secondary ID do not satisfy the binding relationship, the AAA server may not send the second authentication result to the UE. Instead, the AAA server starts an authorization modification procedure or an authorization canceling procedure.

In a specific implementation, the AAA server may add the authentication result to an authentication authorization answer (Authentication Authorization Answer, AAA) or a diameter EAP answer (Diameter EAP Answer, DEA) of the diameter protocol.

It should be noted that, for the embodiment described in FIG. 11, in a possible implementation, step 1 may be implemented after step 11 and before step 12. In other words, after the AAA server obtains the SUPI (or the external ID) and/or the PEI, and the identity response that are sent by the SMF, the AAA server obtains UE-related binding information as required.

Through implementation of this embodiment of the present invention, the AAA server pre-obtains the binding relationship between the secondary ID and the primary ID. When the primary authentication on the UE succeeds, and the secondary authentication for the UE is required, the secondary authentication is first performed according to the existing secondary authentication procedure (conventional authentication). After the authentication succeeds, the AAA server sends a request to the SMF, to request to send the binding information used for the authentication. Only after the SMF sends the foregoing information to the AAA server, the AAA server starts the verification using the binding information. The AAA server can further determine whether the secondary ID of the UE is valid by verifying whether the secondary ID provided by the UE is bound to the authenticated primary ID, to obtain a final authentication result of the secondary authentication. An advantage of this method is that only the binding information is sent to the AAA server that needs to perform the binding authentication, and calculation overheads spent by the AAA server are merely for determining whether the primary ID and the secondary ID of the UE have the binding relationship, so that calculation overheads are low. Therefore, the implementation of this embodiment of the present invention can obviously improve security.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions, and when the computer program instructions are loaded and executed on a computer, all or some of the procedures or functions according to the embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, a magnetic tape, or the like), an optical medium (for example, a DVD or the like), a semiconductor medium (for example, a solid-state drive), or the like.

In the foregoing embodiments, the description of each embodiment has respective focuses. For a part that is not described in detail in an embodiment, refer to related descriptions of other embodiments.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A network authentication method, comprising:
receiving, by an authentication network element (1100, 1200), a request to access a data network, DN, by a user equipment, UE, the authentication network element (1100, 1200) is an authentication, authorization, accounting, AAA, server;
receiving, by the authentication network element (1100, 1200), a first authentication identifier of the UE and a second authentication identifier of the UE sent by a session management function, SMF, apparatus (1300, 1400), wherein the first authentication identifier of the UE has been authenticated by an authentication server function network element, AUSF; and the second authentication identifier of the UE is an identifier used by the UE to request to access the DN; and
verifying, by the authentication network element (1100, 1200) based on first binding information, whether the first authentication identifier of the UE and the second authentication identifier of the UE satisfy the first binding relationship, to obtain an authentication result, wherein the first binding information comprises first binding relationships of one or more pairs of first authentication identifiers and second authentication identifiers, the first authentication identifier in the first binding information indicates an identifier used for authentication performed by the AUSF, and the second authentication identifier in the first binding information indicates an identifier used for authentication on access of the UE to the DN.

2. The method according to claim 1, wherein the first binding information comprises a mapping table, the mapping table comprises one or more entries, and each entry comprises at least one first binding relationship associated with the UE.

3. The method according to claim 1, wherein the first binding information comprises a database, the database comprises one or more data elements, and each data element comprises at least one first binding relationship associated with the UE.

4. The method according to any one of claims 1 to 3, wherein the first binding information is prestored in a local storage of the authentication network element (1100, 1200).

5. The method according to any one of claims 1 to 3, wherein the first binding information is prestored in subscription data of a unified data management network element, UDM; and
before the verifying, by the authentication network element (1100, 1200) based on first binding information, whether the first authentication identifier of the UE and the second authentication identifier of the UE satisfy the first binding relationship, the method comprises:
obtaining, by the authentication network element (1100, 1200), the first binding information from the subscription data of the UDM.

6. The method according to any one of claims 1 to 5, wherein the verifying, by the authentication network element (1100, 1200) based on first binding information, whether the first authentication identifier of the UE and the second authentication identifier of the UE satisfy the first binding relationship, to obtain an authentication result comprises:
if the first authentication identifier of the UE and the second authentication identifier of the UE satisfy the first binding relationship, the authentication result is that the request to access the DN succeeds.

7. The method according to any one of claims 1 to 5, wherein the verifying, by the authentication network element (1100, 1200) based on first binding information, whether the first authentication identifier of the UE and the second authentication identifier of the UE satisfy the first binding relationship, to obtain an authentication result comprises:
if the first authentication identifier of the UE and the second authentication identifier of the UE satisfy the first binding relationship, the authentication result is that the request to access the DN succeeds; or
if the first authentication identifier of the UE and the second authentication identifier of the UE do not satisfy the first binding relationship, attempting, by the authentication network element (1100, 1200), to authenticate the second authentication identifier of the UE according to the extensible identity authentication protocol, EAP, wherein if the authentication network element (1100, 1200) has authenticated the second authentication identifier of the UE according to the EAP, the authentication result is that the request to access the DN succeeds; and updating, by the authentication network element (1100, 1200), the first binding information based on the first authentication identifier of the UE and the second authentication identifier of the UE.

8. The method according to any one of claims 1 to 5, wherein the verifying, by the authentication network element (1100, 1200) based on first binding information, whether the first authentication identifier of the UE and the second authentication identifier of the UE satisfy the first binding relationship, to obtain an authentication result comprises:
if the first authentication identifier of the UE and the second authentication identifier of the UE satisfy the first binding relationship, attempting, by the authentication network element (1100, 1200), to authenticate the second authentication identifier of the UE according to an extensible identity authentication protocol EAP, wherein if the authentication network element (1100, 1200) has authenticated the second authentication identifier of the UE according to the EAP, the authentication result is that the request to access the DN succeeds.

9. An authentication network element (1100) that is an authentication, authorization, accounting, AAA, server, wherein the authentication network element (1100) comprises a transmitter (1103), a receiver (1104), a memory (1102), and a processor (1101) coupled to the memory (1102), and the transmitter (1103), the receiver (1104), the memory (1102), and the processor (1101) can be connected by using a bus or in another manner, wherein
the receiver (1104) is configured to receive a request to access a data network, DN, by a user equipment, UE;
the receiver (1104) is further configured to receive a first authentication identifier of the UE and a second authentication identifier of the UE sent by a session management function, SMF, apparatus (1300, 1400), wherein
the first authentication identifier of the UE has been authenticated by an authentication server function network element, AUSF; and the second authentication identifier of the UE is an identifier used by the UE to request to access the DN;
the processor (1101) is configured to verify, based on first binding information, whether the first authentication identifier of the UE and the second authentication identifier of the UE satisfy the first binding relationship, to obtain an authentication result, wherein the first binding information comprises first binding relationships of one or more pairs of first authentication identifiers and second authentication identifiers, the first authentication identifier in the first binding information indicates an identifier used for authentication performed by the AUSF, and the second authentication identifier in the first binding information indicates an identifier used for authentication on access of the UE to the DN; and
the transmitter (1103) is configured to send the authentication result to the UE.

10. The authentication network element (1100) according to claim 9, wherein the first binding information comprises a mapping table, the mapping table comprises one or more entries, and each entry comprises at least one first binding relationship associated with the UE.

11. The authentication network element (1100) according to claim 9, wherein the first binding information comprises a database, the database comprises one or more data elements, and each data element comprises at least one first binding relationship associated with the UE.

12. The authentication network element (1100) according to any one of claims 9 to 11, wherein the memory (1102) is configured to store the first binding information.

13. The authentication network element (1100) according to any one of claims 9 to 11, wherein the first binding information is prestored in subscription data of a unified data management network element, UDM; and
the receiver (1104) is configured to obtain the first binding information from the subscription data of the UDM;
the processor (1101) is configured to verify based on the first binding information, whether the first authentication identifier of the UE and the second authentication identifier of the UE satisfy the first binding relationship.

14. The authentication network element (1100) according to any one of claims 9 to 13, wherein that the processor (1101) is configured to verify, based on first binding information, whether the first authentication identifier of the UE and the second authentication identifier of the UE satisfy the first binding relationship, to obtain an authentication result comprises:
if the first authentication identifier of the UE and the second authentication identifier of the UE satisfy the first binding relationship, the authentication result is that the request to access the DN succeeds.

15. The authentication network element (1100) according to any one of claims 9 to 13, wherein that the processor (1101) is configured to verify, based on first binding information, whether the first authentication identifier of the UE and the second authentication identifier of the UE satisfy the first binding relationship, to obtain an authentication result comprises:
if the first authentication identifier of the UE and the second authentication identifier of the UE satisfy the first binding relationship, the authentication result is that the request to access the DN succeeds; or
if the first authentication identifier of the UE and the second authentication identifier of the UE do not satisfy the first binding relationship, attempting, by the authentication network element (1100), to authenticate the second authentication identifier of the UE according to the extensible identity authentication protocol EAP, wherein if the authentication network element (1100) has authenticated the second authentication identifier of the UE according to the EAP, the authentication result is that the request to access the DN succeeds; and the processor (1101) is configured to update the first binding information based on the first authentication identifier of the UE and the second authentication identifier of the UE.

## Patentansprüche

1. Netzwerkauthentifizierungsverfahren, umfassend:
Empfangen einer Anforderung zum Zugreifen auf ein Datennetzwerk, DN, durch ein Benutzergerät, UE, durch ein Authentifizierungsnetzwerkelement (1100, 1200), wobei das Authentifizierungsnetzwerkelement (1100, 1200) ein Server zur Authentifizierung, Autorisierung und Abrechnung, AAA, ist;
Empfangen einer ersten Authentifizierungskennung des UE und einer zweiten Authentifizierungskennung des UE, die durch eine Einrichtung (1300, 1400) für Sitzungsverwaltungsfunktionen, SMF, übermittelt werden, durch das Authentifizierungsnetzwerkelement (1100, 1200), wobei die erste Authentifizierungskennung des UE durch ein Netzwerkelement für Authentifizierungsserverfunktionen, AUSF, authentifiziert worden ist; und die zweite Authentifizierungskennung des UE eine Kennung ist, die durch das UE verwendet wird, um anzufordern, auf das DN zuzugreifen; und
Verifizieren durch das Authentifizierungsnetzwerkelement (1100, 1200) auf Grundlage von ersten Bindungsinformationen, ob die erste Authentifizierungskennung des UE und die zweite Authentifizierungskennung des UE die erste Bindungsbeziehung erfüllen, um ein Authentifizierungsergebnis zu erlangen, wobei die ersten Bindungsinformationen erste Bindungsbeziehungen eines oder mehrerer Paare von ersten Authentifizierungskennungen und zweiten Authentifizierungskennungen umfassen, die erste Authentifizierungskennung in den ersten Bindungsinformationen eine Kennung angibt, die zu durch das AUSF durchgeführter Authentifizierung verwendet wird, und die zweite Authentifizierungskennung in den ersten Bindungsinformationen eine Kennung angibt, die zu Authentifizierung bei Zugriff des UE auf das DN verwendet wird.

2. Verfahren nach Anspruch 1, wobei die ersten Bindungsinformationen eine Abbildungstabelle umfassen, die Abbildungstabelle einen oder mehrere Einträge umfasst und jeder Eintrag mindestens eine dem UE zugeordnete erste Bindungsbeziehung umfasst.

3. Verfahren nach Anspruch 1, wobei die ersten Bindungsinformationen eine Datenbank umfassen, die Datenbank ein oder mehrere Datenelemente umfasst und jedes Datenelement mindestens eine dem UE zugeordnete erste Bindungsbeziehung umfasst.

4. Verfahren nach einem der Ansprüche 1 bis 3, wobei die ersten Bindungsinformationen in einem lokalen Speicher des Authentifizierungsnetzwerkelements (1100, 1200) im Voraus gespeichert werden.

5. Verfahren nach einem der Ansprüche 1 bis 3, wobei die ersten Bindungsinformationen in Abonnementdaten eines Netzwerkelements zur einheitlichen Datenverwaltung, UDM, im Voraus gespeichert werden; und
vor dem Verifizieren durch das Authentifizierungsnetzwerkelement (1100, 1200) auf Grundlage von ersten Bindungsinformationen, ob die erste Authentifizierungskennung des UE und die zweite Authentifizierungskennung des UE die erste Bindungsbeziehung erfüllen, das Verfahren Folgendes umfasst:
Erlangen der ersten Bindungsinformationen durch das Authentifizierungsnetzwerkelement (1100, 1200) aus den Abonnementdaten des UDM.

6. Verfahren nach einem der Ansprüche 1 bis 5, wobei das Verifizieren durch das Authentifizierungsnetzwerkelement (1100, 1200) auf Grundlage von ersten Bindungsinformationen, ob die erste Authentifizierungskennung des UE und die zweite Authentifizierungskennung des UE die erste Bindungsbeziehung erfüllen, um ein Authentifizierungsergebnis zu erlangen, Folgendes umfasst:
falls die erste Authentifizierungskennung des UE und die zweite Authentifizierungskennung des UE die erste Bindungsbeziehung erfüllen, lautet das Authentifizierungsergebnis, dass die Anforderung zum Zugreifen auf das DN erfolgreich ist.

7. Verfahren nach einem der Ansprüche 1 bis 5, wobei das Verifizieren durch das Authentifizierungsnetzwerkelement (1100, 1200) auf Grundlage von ersten Bindungsinformationen, ob die erste Authentifizierungskennung des UE und die zweite Authentifizierungskennung des UE die erste Bindungsbeziehung erfüllen, um ein Authentifizierungsergebnis zu erlangen, Folgendes umfasst:
falls die erste Authentifizierungskennung des UE und die zweite Authentifizierungskennung des UE die erste Bindungsbeziehung erfüllen, lautet das Authentifizierungsergebnis, dass die Anforderung zum Zugreifen auf das DN erfolgreich ist; oder
falls die erste Authentifizierungskennung des UE und die zweite Authentifizierungskennung des UE die erste Bindungsbeziehung nicht erfüllen, Versuchen durch das Authentifizierungsnetzwerkelement (1100, 1200), die zweite Authentifizierungskennung des UE gemäß dem erweiterbaren Identitätsauthentifizierungsprotokoll, EAP, zu authentifizieren, wobei, falls das Authentifizierungsnetzwerkelement (1100, 1200) die zweite Authentifizierungskennung des UE gemäß dem EAP authentifiziert hat, das Authentifizierungsergebnis lautet, dass die Anforderung zum Zugreifen auf das DN erfolgreich ist; und Aktualisieren der ersten Bindungsinformationen durch das Authentifizierungsnetzwerkelement (1100, 1200) auf Grundlage der ersten Authentifizierungskennung des UE und der zweiten Authentifizierungskennung des UE.

8. Verfahren nach einem der Ansprüche 1 bis 5, wobei das Verifizieren durch das Authentifizierungsnetzwerkelement (1100, 1200) auf Grundlage von ersten Bindungsinformationen, ob die erste Authentifizierungskennung des UE und die zweite Authentifizierungskennung des UE die erste Bindungsbeziehung erfüllen, um ein Authentifizierungsergebnis zu erlangen, Folgendes umfasst:
falls die erste Authentifizierungskennung des UE und die zweite Authentifizierungskennung des UE die erste Bindungsbeziehung erfüllen, Versuchen durch das Authentifizierungsnetzwerkelement (1100, 1200), die zweite Authentifizierungskennung des UE gemäß einem erweiterbaren Identitätsauthentifizierungsprotokoll, EAP, zu authentifizieren, wobei, falls das Authentifizierungsnetzwerkelement (1100, 1200) die zweite Authentifizierungskennung des UE gemäß dem EAP authentifiziert hat, das Authentifizierungsergebnis lautet, dass die Anforderung zum Zugreifen auf das DN erfolgreich ist.

9. Authentifizierungsnetzwerkelement (1100), das ein Server zur Authentifizierung, Autorisierung und Abrechnung, AAA, ist, wobei das Authentifizierungsnetzwerkelement (1100) einen Sender (1103), einen Empfänger (1104), einen Speicher (1102) und einen Prozessor (1101), der an den Speicher (1102) gekoppelt ist, umfasst und der Sender (1103), der Empfänger (1104), der Speicher (1102) und der Prozessor (1101) durch Verwenden eines Busses oder auf eine andere Weise verbunden sein können, wobei
der Empfänger (1104) dazu konfiguriert ist, eine Anforderung zum Zugreifen auf ein Datennetzwerk, DN, durch ein Benutzergerät, UE, zu empfangen;
der Empfänger (1104) ferner dazu konfiguriert ist, eine erste Authentifizierungskennung des UE und eine zweite Authentifizierungskennung des UE, die durch eine Einrichtung (1300, 1400) für Sitzungsverwaltungsfunktionen, SMF, übermittelt werden, zu empfangen, wobei
die erste Authentifizierungskennung des UE durch ein Netzwerkelement für Authentifizierungsserverfunktionen, AUSF, authentifiziert worden ist; und die zweite Authentifizierungskennung des UE eine Kennung ist, die durch das UE verwendet wird, um anzufordern, auf das DN zuzugreifen;
der Prozessor (1101) dazu konfiguriert ist, auf Grundlage von ersten Bindungsinformationen zu verifizieren, ob die erste Authentifizierungskennung des UE und die zweite Authentifizierungskennung des UE die erste Bindungsbeziehung erfüllen, um ein Authentifizierungsergebnis zu erlangen, wobei die ersten Bindungsinformationen erste Bindungsbeziehungen eines oder mehrerer Paare von ersten Authentifizierungskennungen und zweiten Authentifizierungskennungen umfassen, die erste Authentifizierungskennung in den ersten Bindungsinformationen eine Kennung angibt, die zu durch das AUSF durchgeführter Authentifizierung verwendet wird, und die zweite Authentifizierungskennung in den ersten Bindungsinformationen eine Kennung angibt, die zu Authentifizierung bei Zugriff des UE auf das DN verwendet wird; und
der Sender (1103) dazu konfiguriert ist, das Authentifizierungsergebnis an das UE zu übermitteln.

10. Authentifizierungsnetzwerkelement (1100) nach Anspruch 9, wobei die ersten Bindungsinformationen eine Abbildungstabelle umfassen, die Abbildungstabelle einen oder mehrere Einträge umfasst und jeder Eintrag mindestens eine dem UE zugeordnete erste Bindungsbeziehung umfasst.

11. Authentifizierungsnetzwerkelement (1100) nach Anspruch 9, wobei die ersten Bindungsinformationen eine Datenbank umfassen, die Datenbank ein oder mehrere Datenelemente umfasst und jedes Datenelement mindestens eine dem UE zugeordnete erste Bindungsbeziehung umfasst.

12. Authentifizierungsnetzwerkelement (1100) nach einem der Ansprüche 9 bis 11, wobei der Speicher (1102) dazu konfiguriert ist, die ersten Bindungsinformationen zu speichern.

13. Authentifizierungsnetzwerkelement (1100) nach einem der Ansprüche 9 bis 11, wobei die ersten Bindungsinformationen in Abonnementdaten eines Netzwerkelements zur einheitlichen Datenverwaltung, UDM, im Voraus gespeichert werden; und
der Empfänger (1104) dazu konfiguriert ist, die ersten Bindungsinformationen aus den Abonnementdaten des UDM zu erlangen;
der Prozessor (1101) dazu konfiguriert ist, auf Grundlage der ersten Bindungsinformationen zu verifizieren, ob die erste Authentifizierungskennung des UE und die zweite Authentifizierungskennung des UE die erste Bindungsbeziehung erfüllen.

14. Authentifizierungsnetzwerkelement (1100) nach einem der Ansprüche 9 bis 13, wobei der Umstand, dass der Prozessor (1101) dazu konfiguriert ist, auf Grundlage von ersten Bindungsinformationen zu verifizieren, ob die erste Authentifizierungskennung des UE und die zweite Authentifizierungskennung des UE die erste Bindungsbeziehung erfüllen, um ein Authentifizierungsergebnis zu erlangen, Folgendes umfasst:
falls die erste Authentifizierungskennung des UE und die zweite Authentifizierungskennung des UE die erste Bindungsbeziehung erfüllen, lautet das Authentifizierungsergebnis, dass die Anforderung zum Zugreifen auf das DN erfolgreich ist.

15. Authentifizierungsnetzwerkelement (1100) nach einem der Ansprüche 9 bis 13, wobei der Umstand, dass der Prozessor (1101) dazu konfiguriert ist, auf Grundlage von ersten Bindungsinformationen zu verifizieren, ob die erste Authentifizierungskennung des UE und die zweite Authentifizierungskennung des UE die erste Bindungsbeziehung erfüllen, um ein Authentifizierungsergebnis zu erlangen, Folgendes umfasst:
falls die erste Authentifizierungskennung des UE und die zweite Authentifizierungskennung des UE die erste Bindungsbeziehung erfüllen, lautet das Authentifizierungsergebnis, dass die Anforderung zum Zugreifen auf das DN erfolgreich ist; oder
falls die erste Authentifizierungskennung des UE und die zweite Authentifizierungskennung des UE die erste Bindungsbeziehung nicht erfüllen, Versuchen durch das Authentifizierungsnetzwerkelement (1100), die zweite Authentifizierungskennung des UE gemäß dem erweiterbaren Identitätsauthentifizierungsprotokoll, EAP, zu authentifizieren, wobei, falls das Authentifizierungsnetzwerkelement (1100) die zweite Authentifizierungskennung des UE gemäß dem EAP authentifiziert hat, das Authentifizierungsergebnis lautet, dass die Anforderung zum Zugreifen auf das DN erfolgreich ist; und der Prozessor (1101) dazu konfiguriert ist, die ersten Bindungsinformationen auf Grundlage der ersten Authentifizierungskennung des UE und der zweiten Authentifizierungskennung des UE zu aktualisieren.

## Revendications

1. Procédé d'authentification de réseau, comprenant :
la réception, par un élément de réseau d'authentification (1100, 1200), d'une demande pour accéder à un réseau de données, DN, par un équipement utilisateur, UE, l'élément de réseau d'authentification (1100, 1200) est un serveur d'authentification, d'autorisation, de comptabilité, AAA ;
la réception, par l'élément de réseau d'authentification (1100, 1200), d'un premier identifiant d'authentification de l'UE et d'un second identifiant d'authentification de l'UE envoyés par un appareil de fonction de gestion de session, SMF, (1300, 1400), dans lequel le premier identifiant d'authentification de l'UE a été authentifié par un élément de réseau de fonction de serveur d'authentification, AUSF ; et le second identifiant d'authentification de l'UE est un identifiant utilisé par l'UE pour demander d'accéder au DN ; et
la vérification, par l'élément de réseau d'authentification (1100, 1200) sur la base d'une première information de liaison, de si le premier identifiant d'authentification de l'UE et le second identifiant d'authentification de l'UE satisfont à la première relation de liaison, pour obtenir un résultat d'authentification, dans lequel la première information de liaison comprend des premières relations de liaison d'une ou plusieurs paires de premiers identifiants d'authentification et de seconds identifiants d'authentification, le premier identifiant d'authentification dans la première information de liaison indique un identifiant utilisé pour une authentification effectuée par l'AUSF, et le second identifiant d'authentification dans la première information de liaison indique un identifiant utilisé pour une authentification lors de l'accès de l'UE au DN.

2. Procédé selon la revendication 1, dans lequel la première information de liaison comprend une table de mappage, la table de mappage comprend une ou plusieurs entrées, et chaque entrée comprend au moins une première relation de liaison associée à l'UE.

3. Procédé selon la revendication 1, dans lequel la première information de liaison comprend une base de données, la base de données comprend un ou plusieurs éléments de données, et chaque élément de données comprend au moins une première relation de liaison associée à l'UE.

4. Procédé selon l'une quelconque des revendications 1 à 3, dans lequel la première information de liaison est préstockée dans un stockage local de l'élément de réseau d'authentification (1100, 1200).

5. Procédé selon l'une quelconque des revendications 1 à 3, dans lequel la première information de liaison est préstockée dans des données d'abonnement d'un élément de réseau de gestion de données unifiée, UDM ; et
avant la vérification, par l'élément de réseau d'authentification (1100, 1200) sur la base d'une première information de liaison, de si le premier identifiant d'authentification de l'UE et le second identifiant d'authentification de l'UE satisfont à la première relation de liaison, le procédé comprend :
l'obtention, par l'élément de réseau d'authentification (1100, 1200), de la première information de liaison à partir des données d'abonnement de l'UDM.

6. Procédé selon l'une quelconque des revendications 1 à 5, dans lequel la vérification, par l'élément de réseau d'authentification (1100, 1200) sur la base d'une première information de liaison, de si le premier identifiant d'authentification de l'UE et le second identifiant d'authentification de l'UE satisfont à la première relation de liaison, pour obtenir un résultat d'authentification comprend :
si le premier identifiant d'authentification de l'UE et le second identifiant d'authentification de l'UE satisfont à la première relation de liaison, le résultat d'authentification est que la demande pour accéder au DN aboutit.

7. Procédé selon l'une quelconque des revendications 1 à 5, dans lequel la vérification, par l'élément de réseau d'authentification (1100, 1200) sur la base d'une première information de liaison, de si le premier identifiant d'authentification de l'UE et le second identifiant d'authentification de l'UE satisfont à la première relation de liaison, pour obtenir un résultat d'authentification comprend :
si le premier identifiant d'authentification de l'UE et le second identifiant d'authentification de l'UE satisfont à la première relation de liaison, le résultat d'authentification est que la demande pour accéder au DN aboutit ; ou
si le premier identifiant d'authentification de l'UE et le second identifiant d'authentification de l'UE ne satisfont pas à la première relation de liaison, la tentative, par l'élément de réseau d'authentification (1100, 1200), d'authentifier le second identifiant d'authentification de l'UE selon le protocole d'authentification d'identité extensible, EAP, dans lequel si l'élément de réseau d'authentification (1100, 1200) a authentifié le second identifiant d'authentification de l'UE selon l'EAP, le résultat d'authentification est que la demande pour accéder au DN aboutit ; et la mise à jour, par l'élément de réseau d'authentification (1100, 1200), de la première information de liaison sur la base du premier identifiant d'authentification de l'UE et du second identifiant d'authentification de l'UE.

8. Procédé selon l'une quelconque des revendications 1 à 5, dans lequel la vérification, par l'élément de réseau d'authentification (1100, 1200) sur la base d'une première information de liaison, de si le premier identifiant d'authentification de l'UE et le second identifiant d'authentification de l'UE satisfont à la première relation de liaison, pour obtenir un résultat d'authentification comprend :
si le premier identifiant d'authentification de l'UE et le second identifiant d'authentification de l'UE satisfont à la première relation de liaison, la tentative, par l'élément de réseau d'authentification (1100, 1200), d'authentifier le second identifiant d'authentification de l'UE selon un protocole d'authentification d'identité extensible EAP, dans lequel si l'élément de réseau d'authentification (1100, 1200) a authentifié le second identifiant d'authentification de l'UE selon l'EAP, le résultat d'authentification est que la demande pour accéder au DN aboutit.

9. Elément de réseau d'authentification (1100) qui est un serveur d'authentification, d'autorisation, de comptabilité, AAA, dans lequel l'élément de réseau d'authentification (1100) comprend un émetteur (1103), un récepteur (1104), une mémoire (1102), et un processeur (1101) couplé à la mémoire (1102), et l'émetteur (1103), le récepteur (1104), la mémoire (1102), et le processeur (1101) peuvent être connectés en utilisant un bus ou d'une autre manière, dans lequel
le récepteur (1104) est configuré pour recevoir une demande pour accéder à un réseau de données, DN, par un équipement utilisateur, UE ;
le récepteur (1104) est en outre configuré pour recevoir un premier identifiant d'authentification de l'UE et un second identifiant d'authentification de l'UE envoyés par un appareil de fonction de gestion de session, SMF, (1300, 1400), dans lequel
le premier identifiant d'authentification de l'UE a été authentifié par un élément de réseau de fonction de serveur d'authentification, AUSF ; et le second identifiant d'authentification de l'UE est un identifiant utilisé par l'UE pour demander d'accéder au DN ;
le processeur (1101) est configuré pour vérifier, sur la base d'une première information de liaison, si le premier identifiant d'authentification de l'UE et le second identifiant d'authentification de l'UE satisfont à la première relation de liaison, pour obtenir un résultat d'authentification, dans lequel la première information de liaison comprend des premières relations de liaison d'une ou plusieurs paires de premiers identifiants d'authentification et de seconds identifiants d'authentification, le premier identifiant d'authentification dans la première information de liaison indique un identifiant utilisé pour une authentification effectuée par l'AUSF, et le second identifiant d'authentification dans la première information de liaison indique un identifiant utilisé pour une authentification lors de l'accès de l'UE au DN ; et
l'émetteur (1103) est configuré pour envoyer le résultat d'authentification à l'UE.

10. Elément de réseau d'authentification (1100) selon la revendication 9, dans lequel la première information de liaison comprend une table de mappage, la table de mappage comprend une ou plusieurs entrées, et chaque entrée comprend au moins une première relation de liaison associée à l'UE.

11. Elément de réseau d'authentification (1100) selon la revendication 9, dans lequel la première information de liaison comprend une base de données, la base de données comprend un ou plusieurs éléments de données, et chaque élément de données comprend au moins une première relation de liaison associée à l'UE.

12. Elément de réseau d'authentification (1100) selon l'une quelconque des revendications 9 à 11, dans lequel la mémoire (1102) est configurée pour stocker la première information de liaison.

13. Elément de réseau d'authentification (1100) selon l'une quelconque des revendications 9 à 11, dans lequel la première information de liaison est préstockée dans des données d'abonnement d'un élément de réseau de gestion de données unifiée, UDM ; et
le récepteur (1104) est configuré pour obtenir la première information de liaison à partir des données d'abonnement de l'UDM ;
le processeur (1101) est configuré pour vérifier sur la base de la première information de liaison, si le premier identifiant d'authentification de l'UE et le second identifiant d'authentification de l'UE satisfont à la première relation de liaison.

14. Elément de réseau d'authentification (1100) selon l'une quelconque des revendications 9 à 13, dans lequel le fait que le processeur (1101) est configuré pour vérifier, sur la base d'une première information de liaison, si le premier identifiant d'authentification de l'UE et le second identifiant d'authentification de l'UE satisfont à la première relation de liaison, pour obtenir un résultat d'authentification comprend :
si le premier identifiant d'authentification de l'UE et le second identifiant d'authentification de l'UE satisfont à la première relation de liaison, le résultat d'authentification est que la demande pour accéder au DN aboutit.

15. Elément de réseau d'authentification (1100) selon l'une quelconque des revendications 9 à 13, dans lequel le fait que le processeur (1101) est configuré pour vérifier, sur la base d'une première information de liaison, si le premier identifiant d'authentification de l'UE et le second identifiant d'authentification de l'UE satisfont à la première relation de liaison, pour obtenir un résultat d'authentification comprend :
si le premier identifiant d'authentification de l'UE et le second identifiant d'authentification de l'UE satisfont à la première relation de liaison, le résultat d'authentification est que la demande pour accéder au DN aboutit ; ou
si le premier identifiant d'authentification de l'UE et le second identifiant d'authentification de l'UE ne satisfont pas à la première relation de liaison, la tentative, par l'élément de réseau d'authentification (1100), d'authentifier le second identifiant d'authentification de l'UE selon le protocole d'authentification d'identité extensible EAP, dans lequel si l'élément de réseau d'authentification (1100) a authentifié le second identifiant d'authentification de l'UE selon l'EAP, le résultat d'authentification est que la demande pour accéder au DN aboutit ; et le processeur (1101) est configuré pour mettre à jour la première information de liaison sur la base du premier identifiant d'authentification de l'UE et du second identifiant d'authentification de l'UE.
